# EUROPÄISCHE PATENTSCHRIFT

(11) **EP 2 927 811 B1**
(45) Veröffentlichungstag und Bekanntmachung des Hinweises auf die Patenterteilung: **19.01.2022**
(21) Anmeldenummer: 15158401.8
(22) Anmeldetag: 10.03.2015
(51) Int. Cl.: G06F 11/36

(54) **Verfahren zur Steuerung eines automatisierten Ablaufs**
Method for controlling an automated process
Procédé de commande d'un écoulement automatisé

(30) Priorität: 10.03.2014 AT 501722014
(43) Veröffentlichungstag der Anmeldung: 07.10.2015
(73) Patentinhaber: Frequentis AG, 1100 Wien (AT)
(72) Erfinder: Podlas, Rainer, 2230 Gänserndorf (AT)
(74) Vertreter: Wildhack & Jellinek

(56) Entgegenhaltungen:
- WO-A2-2005/048109
- WO-A2-2009/002997
- US-A1- 2007 168 970

## Beschreibung

Die Erfindung betrifft ein Verfahren zur Steuerung eines automatisierten Ablaufs, insbesondere eines Testlaufs, und die Bereitstellung der dafür benötigten Ablaufumgebung in einem verteilten System umfassend eine Anzahl von miteinander vernetzten Rechnern gemäß dem Patentanspruch 1. Weiters betrifft die Erfindung ein Rechnernetzwerk gemäß Patentanspruch 10.

Programme zur Verkehrssteuerung und Überwachung verwenden in der Regel hochkomplexe und verteilte Systeme, die aus zahlreichen Rechnern und Komponenten bestehen, die reibungslos miteinander zusammenspielen oder interagieren müssen. Fehler bei deren Installation, Konfiguration und Betrieb haben im sicherheitskritischen Umfeld in der Regel fatale Folgen. Aus diesem Grund ist es auch ganz entscheidend, Programmfehler möglichst automatisiert, z.B. in einem ganzheitlichen Systemtest zu erkennen, bei dem sämtliche Komponenten miteinander zusammenwirken.

Aus der WO 2009/002997 A2 ist ein Verfahren zum Testen von Software auf einer Anzahl von verteilten Clients bekannt, die jeweils ein unterschiedliches Betriebsumfeld haben können. Dabei wird jedem Client ein Test-Framework zum Testen von Software bereitgestellt und eine zu testende Software an das Test-Framework übermittelt. Daten über das Betriebsumfeld des jeweiligen Client und Testergebnisse von jedem Test-Framework werden empfangen und die Testergebnisse mit den Daten über das jeweilige Betriebsumfeld in einer Datenbank gespeichert, sowie die Resultate der auf den Clients abgelaufenen Tests berichtet.

US2007168970 offenbart Systeme und Verfahren für das automatische verteilte Testen von Software.

WO2005048109 A2 offenbart Verfahren für das verteilte Testen von Software.

Ein solcher Test wird vorteilhafterweise von einem Verfahren ausgeführt, das eine Vielzahl unterschiedlicher Ablaufsszenarien auf den jeweiligen Endsystemen ermöglicht, die auch tatsächlich für den jeweiligen Einsatzzweck, insbesondere zur Verkehrssteuerung und Überwachung operativ eingesetzt werden. Mit dem erfindungsgemäßen Verfahren wird das tatsächliche im Einsatz befindliche Endsystem vor Ort bzw. über Fernzugriff mit einer verteilten Automatisierungs- und Testumgebung ausgestattet, ohne dass die Notwendigkeit besteht, die einzelnen Komponenten des verteilten Endsystems für die automatisierte Interaktion vorzubereiten. Darüber hinaus ermöglicht dieses Vorgehen eine laufende Entwicklung und Verbesserung von Software-Komponenten des Systems, welche durch das Verfahren unmittelbar in das Endsystem eingespielt, und automatisch und vor Ort einem Gesamttest unterzogen werden können. Insgesamt wird es somit möglich, auf ein bereits in Betrieb befindliches System parallel zu dessen eigentlichem System bei Bedarf eine Automatisierungsplattform bereitzustellen bzw. nach ihrer Verwendung auch wieder sauber zu entfernen ohne dass der Betrieb des Endsystems hierfür zwischenzeitlich beendet werden müsste.

Aus dem Stand der Technik sind unterschiedliche Test- bzw. Automatisierungsplattformen bekannt, die insgesamt aufwendig in der Handhabung sind und nicht darauf ausgelegt sind, am operativen Endsystem zum Einsatz zu kommen. Besonders bei Automatisierungsplattformen gemäß dem Stand der Technik besteht die Schwierigkeit, dass bestehende, bereits operative Systeme nicht oder nur mit erheblichem manuellen Aufwand unmittelbar beim Endbenutzer auf dem für den Einsatz bestimmten Endsystem getestet werden können. Darüber hinaus besteht das Problem, dass das Endsystem während des Testablaufs zumindest teilweise produktiv benutzbar bleiben sollte. Weiters besteht bei generischen Testumgebungen das Problem, dass deren Software-Komponenten nur mit großem Aufwand installiert und wieder sauber, d.h. ohne Artefakte zu hinterlassen, entfernt werden können, zumal es in vielen Fällen auch nicht möglich ist, das zu testende System dafür herunterzufahren oder speziell für den Test zu konfigurieren. Dennoch ist es erforderlich, die Funktionsfähigkeit einzelner Programme am Endsystem vor dem Betrieb ausführlich zu testen um mögliche Schwachstellen im Programm auffinden zu können, oder auch um den Endbenutzern ein zeitgerechtes Erlernen des Programms zu ermöglichen.

Weiters besteht die steigende Notwendigkeit einen automatisierten Betrieb, insbesondere Systemtests, sowie Integrationstests, Lasttests oder Stabilitätstests unmittelbar auf in Betrieb befindlichen Systemen durchzuführen.

Auch nicht test-bezogene Szenarien wie die erwähnte Systeminstallation, das Aufzeichnen und Auswerten wichtiger Systemereignisse, oder das Sammeln und Aufbereiten von Systemdaten sind automatisierte Abläufe welche ebenso auf operativen Endsystemen benötigt werden. Flexibilität, Vielseitigkeit und Erweiterbarkeit sind daher wesentliche Anforderungen an ein Automatisierungsverfahren um diese Vielzahl an Anwendungsgebieten abdecken zu können.

Bei den im Test befindlichen Systemen kann es sich grundsätzlich um beliebige Computer-, Kommunikations- und/oder Datennetzwerke handeln. Das beschriebene Verfahren ist auch für virtualisierte Systeme geeignet, wobei es jedoch insbesondere auf in Betrieb befindliche Systeme abzielt für die eine Virtualisierung nicht möglich bzw. zielführend ist.

Von überragender Bedeutung sind die vorliegenden Test und Automationsverfahren insbesondere bei Verkehrsleitsystemen, für die komplexe sicherheitstechnische Anforderungen gelten.

Die Erfindung stellt sich die Aufgabe die vorstehend genannten Probleme zu überwinden.

Insbesondere ist es Aufgabe der Erfindung, ein Verfahren zu schaffen, mit dem eine Automatisierungsplattform auf einem bereits in Betrieb befindlichen, verteilten Endsystem bereitgestellt wird, um eine Anzahl an Komponenten des Systems bzw. auch das gesamte System inklusive z.B. angebundener Kommunikationsinfrastruktureinrichtungen für die Durchführung automatisierter Ablaufszenarien zu instrumentieren, ohne aber den Betrieb des Endsystems zu behindern bzw. unterbrechen zu müssen, und/oder das Endsystem speziell für die Automatisierung vorbereiten zu müssen.

Automatisierte Ablaufszenarien am durch die Automatisierungsplattform verwendeten Endsystems oder eines Teils hiervon beinhalten z.B. Installationsszenarien, Testszenarien, Überwachungsszenarien, Continuous Delivery, wobei sich Szenarien typischerweise von einem Endpunkt durch das ganzheitliche System zu einem weiteren Endpunkt des Systems erstrecken Zusätzlich zu operativen Systemen unterstützt das Verfahren auch die Bereitstellung einer Automatisierungsplattform auf zugeordneten Testsystemen oder virtuellen Systemen.

Weiters soll die Erfindung gewährleisten, dass die bereitgestellte Automatisierungsplattform vom operativen Endsystem wieder sauber entfernt werden kann, wobei verwendete Komponenten für das verteilte Endsystem wieder freigegeben werden, ohne den Betrieb des Endsystems zu behindern und/oder unterbrechen zu müssen, und dass die Rechner bzw. Komponenten für nachfolgende automatisierte Ablaufszenarien verwendbar sind.

Die Erfindung löst diese Aufgabe mit einem Verfahren zur Steuerung eines automatisierten Ablaufs, insbesondere eines Testlaufs sowie gegebenenfalls die Bereitstellung der dafür benötigten Ablaufumgebung, in einem Computernetzwerk (1) umfassend eine Anzahl miteinander vernetzter Rechner (11...15), auf denen jeweils ein als ablaufender Dienst implementiertes Basisprogramm (20), das dazu eingerichtet ist, auf Anfrage eines Steuerrechners (3) mit diesem eine Datenkommunikationsverbindung aufzubauen und jeweils ein oder mehrere, insbesondere über das Computernetzwerk (1) zusammenwirkende, Programme (22) ablaufen, wobei diese Programme (22) jeweils eine vorgegebene Schnittstelle zur Ermöglichung einer Datenkommunikation mit ihm zur Verfügung stellen.

Die Erfindung sieht hierbei vor, dass zur Vorbereitung eines automatisierten Ablaufs von zumindest einem Steuerrechner an das im jeweiligen Rechner ablaufende Basisprogramm ein Profildatensatz übermittelt wird,
- wobei der Profildatensatz Informationen aufweist hinsichtlich eines Programms das auf dem jeweiligen Rechner im Zuge des automatisierten Ablaufs ablaufen soll, und
- wobei der Profildatensatz Informationen enthält hinsichtlich eines Schnittstellenprogramms das auf Anfrage eine Datenkommunikation mit dem jeweiligen Programm ermöglicht.

Weiters sieht die Erfindung vor, dass von dem zumindest einen mit dem System verbundenen Steuerrechner für zumindest eine der von den Programmen auf dem jeweiligen Rechner zur Verfügung gestellten Schnittstellen jeweils ein durch den Profildatensatz gewähltes Schnittstellenprogramm an den jeweiligen Rechner übermittelt wird, wobei das Schnittstellenprogramm einen, die Schnittstelle betreffenden und an das jeweilige auf dem Rechner ablaufende Programm angepassten Basis-Befehlssatz umfassend eine Anzahl von Basis-Befehlen zur Verfügung stellt, wobei den Schnittstellenprogrammen jeweils ein konfigurierbarer Programmspeicher zum Abspeichern einer Anzahl von Basisbefehlen zugewiesen wird, wobei vor dem oder während des automatischen Betriebs, insbesondere vom Steuerrechner, an das jeweilige Schnittstellenprogramm jeweils eine Anzahl von Programmroutinen übertragen und im Programmspeicher abgespeichert wird, wobei die im Programmspeicher befindlichen Programmroutinen bei Aufruf auf die jeweiligen Schnittstellen mittels des Basis-Befehlssatzes zugreifen, wobei für den automatischen Betrieb ein Domänen-Befehlssatz umfassend eine Anzahl von Befehlen festgelegt wird, wobei jedem der Befehle des Domänen-Befehlssatzes jeweils zumindest eine im Programmspeicher befindliche Programmroutine zugeordnet wird, wobei der Domänen-Befehlssatz vor dem oder während des automatischen Betriebs an das jeweilige Schnittstellenprogramm übertragen wird, wobei ein Ablaufsteuerungsprogramm umfassend eine Anzahl im Domänen-Befehlssatz festgelegten Befehlen, insbesondere vom Steuerrechner, an zumindest einen Rechner übermittelt wird, wobei das Ablaufsteuerungsprogramm auf dem Rechner ausgeführt wird und bei Ausführung eines der Befehle des Domänen-Befehlssatzes beim jeweiligen Rechner jeweils von diesem Rechner die dem jeweiligen Befehl zugeordnete in dessen Programmspeicher abgespeicherte Programmroutine ausgeführt wird und wobei der Steuerrechner die zentrale Ablaufsteuerung der einzelnen Ablaufsteuerungsprogramme auf den Rechnern übernimmt und deren Start und/oder deren Ende triggert.

Zur flexibleren Gestaltung des automatisierten Ablaufs, insbesondere des Tests kann vorgesehen sein, dass während des automatisierten Ablaufs, insbesondere nach der Ausführung zumindest eines Befehls des Domänen-Befehlssatzes zumindest eine im Programmspeicher eines Schnittstellenprogramms befindliche Programmroutine abgeändert oder entfernt wird, oder der Domänen-Befehlssatz geändert wird, indem einem bestehenden Befehl eine andere Programmroutine zugeordnet wird oder der Domänen-Befehlssatz erweitert wird, indem ein neuer Befehl vorgegeben wird und diesem eine neue oder bestehende Programmroutine zugewiesen wird.

Um die Interoperabilität unterschiedlicher laufender Programme mit derselben Schnittstelle zu testen, kann vorgesehen sein, dass während der Ausführung eines Ablaufsteuerungsprogramms ein auf dem jeweiligen Rechner laufendes Programm entfernt und durch ein weiteres Programm ersetzt wird, das entweder dieselbe Schnittstelle für die Datenkommunikation verwendet wie das Programm oder für das ein weiteres Schnittstellenprogramm installiert wird, das eine Datenkommunikation mit dem weiteren Programm ermöglicht.

Um die Verwendung alternativer Schnittstellen durch die ablaufenden Programme bei der Automation erfassen zu können, kann vorgesehen sein, dass während der Ausführung eines Ablaufsteuerungsprogramms ein auf dem jeweiligen Rechner laufendes Schnittstellenprogramm entfernt und durch ein weiteres, dieselbe Schnittstelle für die Datenkommunikation verwendendes Schnittstellenprogramm ersetzt wird.

Eine bevorzugte Möglichkeit der zentralen Verwaltung der einzelnen Rechner sieht vor, dass
a) vor dem automatisierten Ablauf auf jedem der Rechner des Systems jeweils ein Basisprogramm ausgeführt wird, das eine Datenkommunikation mit dem zumindest einen Steuerrechner ermöglicht, wobei das Basisprogramm einen Profildatenspeicher zur Abspeicherung eines Profildatensatzes verwaltet,
b) dass der zumindest eine Steuerrechner an die Basisprogramme der Rechner, die für den automatisierten Ablauf herangezogen werden, jeweils einen Profildatensatz übermittelt, der im Profildatenspeicher des jeweiligen Basisprogramms abgespeichert wird, wobei der Profildatensatz Informationen, insbesondere Zugriffsinformationen, über zumindest eines der folgenden Daten umfasst: das zumindest eine auszuführende Programm sowie gegebenenfalls Information betreffend seinen Betrieb, seine Installation und/oder seine Überwachung und/oder das zumindest eine zu verwendende Schnittstellenprogramm sowie eine Zuordnung zum jeweiligen auszuführenden Programm, und/oder die im Programmspeicher abzuspeichernden Programmroutinen, und/oder eine Zuordnung von Programmroutinen zu Befehlen des Domänen-Befehlssatzes,
c) dass die auf den Rechnern ablaufenden Basisprogramme die im Profildatensatz angegebenen Programme und/oder Schnittstellenprogramme und/oder Programmroutinen und/oder die Zuordnung von zumindest einem Steuerrechner oder Download-Server abfragen und übermittelt erhalten, und
   - dass die auf den Rechnern ablaufenden Basisprogramme nach dem Erhalt die Programme abspeichern und gegebenenfalls aufrufen, und/oder die Schnittstellenprogramme abspeichern und gegebenenfalls starten, wobei die Schnittstellenprogramme auf die von den Programmen bereitgestellten Schnittstellen zugreifen, und/oder die Programmroutinen im Programmspeicher abspeichern, und/oder jedem der Befehle des Domänen-Befehlssatzes jeweils zumindest eine Programmroutine entsprechend der erhaltenen Zuordnung zuweisen, und
d) dass die auf den Rechnern für die Profildatensätze gestarteten Schnittstellenprogramme einen Zugriff auf die entsprechenden Programme für die Durchführung von automatisierten Ablaufszenarien durch die Ablaufsteuerungsprogramme bereitstellen.

Hierbei besteht der besondere Vorteil, dass der gesamte automatisierte Ablauf, insbesondere Testablauf, für sämtliche Rechner von zumindest einem zentralen Steuerrechner aus gesteuert werden kann, wobei sämtliche den Ablauf betreffenden Konfigurationen an einer zentralen Stelle vorgenommen werden können.

Um eine rasche und einfache Rekonfiguration des Netzwerks während des Ablaufs vornehmem zu können, kann vorgesehen sein, dass während des Ablaufs eines Ablaufsteuerungsprogramms dem jeweiligen Rechner ein neuer Profildatensatz übermittelt wird, und dass in diesem Fall die Schritte b), c) und d) erneut automatisiert durchgeführt werden.

Eine einfache Anpassung des Netzwerks an unterschiedliche automatisierte Ablaufszenarien oder Testszenarien sieht vor, dass bei einem automatischen Ablauf vorab eine Anzahl an benötigten Profilen vorgegeben wird und aufgrund der Anzahl und Art der Profile im Computernetzwerk ein Automatisierungscluster umfassend eine Anzahl von Rechnern festgelegt wird, die für den automatischen Ablauf benötigt werden, wobei bei Erhalt des jeweiligen Profils die in den einzelnen Profilen festgelegten Programme, Schnittstellenprogramme und/oder Programmroutinen und/oder Zuordnungen auf den jeweiligen Rechnern installiert und/oder gestartet werden, und dass gegebenenfalls nach dem automatisierten Ablauf der Automatisierungscluster freigegeben wird und die Profile von den jeweiligen Rechnern entfernt werden, wobei vorzugsweise auch alle für die Durchführung benötigten, und insbesondere vom Steuerrechner übermittelten, Programme, und/oder Schnittstellenprogramme und/oder Programmroutinen und/oder Zuordnungen, entfernt werden, und/oder dass nach der Bereitstellung, insbesondere nach der Installation und/oder nach dem Start, der in den einzelnen Profilen festgelegten Programme, Schnittstellenprogramme und/oder Programmroutinen und/oder Zuordnungen auf den jeweiligen Rechnern das auf dem jeweiligen Rechner befindliche Profil für die Benutzung durch ein Ablaufszenario zur Verfügung steht und dass das jeweilige Profil für die exklusive Benutzung im Rahmen eines Ablaufszenarios reserviert oder gebucht wird, und bis zur Freigabe nach der Beendigung des Ablaufszenarios ausschließlich von Befehlen im Rahmen desselben Ablaufszenarios benutzt wird.

Eine vorteilhafte Anpassung an die Gegebenheiten eines in Betrieb befindlichen, produktiven Systems sieht vor, dass auf den Rechnern des Computernetzwerks, die nicht zum Automatisierungscluster zählen, dieselben Programme im produktiven Betrieb ausgeführt werden wie sie auf den Rechnern des Automatisierungsclusters für die Durchführung von automatisierten Ablaufszenarien verwendet werden.

Um die Belastung eines realen Systems realistisch, insbesondere in Testszenarien, zu berücksichtigen, kann vorgesehen sein, dass Rechner, auf denen einzelne Profildatensätze installiert sind, und die einzelnen auf diesen Rechnern ablaufenden Programme, Schnittstellenprogramme, Programmroutinen und Zuordnungen von mehreren parallel ablaufenden automatischen Ablaufszenarien verwendet werden.

Weiters löst die Erfindung die Aufgabe bei einem Computernetzwerk, umfassend eine Anzahl miteinander vernetzter Rechner, auf denen jeweils ein als ablaufender Dienst implementiertes Basisprogramm, das dazu eingerichtet ist, auf Anfrage eines Steuerrechners mit diesem eine Datenkommunikationsverbindung aufzubauen und jeweils ein oder mehrere, insbesondere über das Computernetzwerk zusammenwirkende, Programme ablaufen, wobei diese Programme jeweils eine vorgegebene Schnittstelle zur Ermöglichung einer Datenkommunikation mit ihm zur Verfügung stellen.

Hierbei sieht die Erfindung vor, dass das System zumindest einen Steuerrechner aufweist, wobei der zumindest eine Steuerrechner dazu ausgebildet ist, zur Vorbereitung eines automatisierten Ablaufs an das im jeweiligen Rechner ablaufende Basisprogramm einen Profildatensatz übermitteln,
- wobei der Profildatensatz Informationen aufweist hinsichtlich eines Programms das auf dem jeweiligen Rechner im Zuge des automatisierten Ablaufs ablaufen soll, und
- wobei der Profildatensatz Informationen enthält hinsichtlich eines Schnittstellenprogramms das auf Anfrage eine Datenkommunikation mit dem jeweiligen Programm ermöglicht,
wobei auf zumindest einem Rechner ein durch den Profildatensatz gewähltes Schnittstellenprogramm abläuft, das auf die vom Programm zur Verfügung gestellte Schnittstelle zugreift und auf Anfrage eine Datenkommunikation mit dem jeweiligen Programm ermöglicht, und
- wobei das Schnittstellenprogramm einen, die Schnittstelle betreffenden und an das jeweilige auf dem Rechner ablaufende Programm angepassten Basis-Befehlssatz umfassend eine Anzahl von Basis-Befehlen zur Verfügung stellt, wobei den Schnittstellenprogrammen jeweils ein konfigurierbarer Programmspeicher zum Abspeichern einer Anzahl von Basisbefehlen zugewiesen ist, in dem eine Anzahl von Programmroutinen abgespeichert ist, wobei die im Programmspeicher befindlichen Programmroutinen bei Aufruf auf die jeweiligen Schnittstellen mittels des Basis-Befehlssatzes zugreifen, wobei für den automatischen Betrieb ein Domänen-Befehlssatz umfassend eine Anzahl von Befehlen festgelegt ist, wobei jedem der Befehle des Domänen-Befehlssatzes jeweils zumindest eine im Programmspeicher befindliche Programmroutine zugeordnet ist, wobei ein Ablaufsteuerungsprogramm umfassend eine Anzahl im Domänen-Befehlssatz festgelegten Befehlen im Speicher des Rechners abgespeichert ist, wobei der Rechner das Ablaufsteuerungsprogramm ausführt und der Rechner bei Ausführung eines der Befehle des Domänen-Befehlssatzes die dem jeweiligen Befehl zugeordnete in dessen Programmspeicher abgespeicherte Programmroutine ausführt.

Zur flexibleren Gestaltung des automatisierten Ablaufs, insbesondere des Tests kann vorgesehen sein, dass auf den Rechnern während des automatisierten Ablaufs, insbesondere nach der Ausführung zumindest eines Befehls des Domänen-Befehlssatzes zumindest eine im Programmspeicher eines Schnittstellenprogramms befindliche Programmroutine abgeändert oder entfernt wird, oder der Domänen-Befehlssatz geändert wird, indem einem bestehenden Befehl eine andere Programmroutine zugeordnet wird oder der Domänen-Befehlssatz erweitert wird, indem ein neuer Befehl vorgegeben wird und diesem eine neue oder bestehende Programmroutine zugewiesen wird.

Um die Interoperabilität unterschiedlicher laufender Programme mit derselben Schnittstelle zu testen, kann vorgesehen sein, dass die Rechner während der Ausführung eines Ablaufsteuerungsprogramms ein auf dem jeweiligen Rechner laufendes Programm entfernen und durch ein weiteres Programm ersetzen, wobei dieses weitere Programm entweder dieselbe Schnittstelle verwendet wie das entfernte Programm oder der jeweilige Rechner ein neues Schnittstellenprogramm installiert, das eine Datenkommunikation mit dem weiteren Programm ermöglicht.

Um die Verwendung alternativer Schnittstellen durch die ablaufenden Programme bei der Automation erfassen zu können, kann vorgesehen sein, dass die Rechner während der Ausführung eines Ablaufsteuerungsprogramms ein auf dem jeweiligen Rechner laufendes Schnittstellenprogramm entfernen und durch ein weiteres, dieselbe Schnittstelle für die Datenkommunikation verwendendes Schnittstellenprogramm ersetzen.

Eine bevorzugte Möglichkeit der zentralen Verwaltung der einzelnen Rechner sieht vor, dass auf jedem der Rechner des Systems jeweils ein Basisprogramm abläuft, das eine Datenkommunikation mit dem zumindest einen Steuerrechner ermöglicht, wobei das Basisprogramm einen Profildatenspeicher zur Abspeicherung eines Profildatensatzes verwaltet, dass für den automatisierten Ablauf ein Profildatensatz zur Verfügung steht, der Informationen, insbesondere Zugriffsinformationen, über zumindest eines der folgenden Daten umfasst: das zumindest eine auszuführende Programm sowie Angaben zum Betrieb, zu seiner Installation und/oder zu seiner Überwachung, und/oder das zumindest eine zu verwendende Schnittstellenprogramm sowie eine Zuordnung zum jeweiligen auszuführenden Programm, und/oder die im Programmspeicher abzuspeichernden Programmroutinen, und/oder eine Zuordnung von Programmroutinen zu Befehlen des Domänen-Befehlssatzes.

Hierbei besteht der besondere Vorteil, dass der gesamte automatisierte Ablauf, insbesondere Testablauf, für sämtliche Rechner von zumindest einem zentralen Steuerrechner aus gesteuert werden kann, wobei sämtliche den Ablauf betreffenden Konfigurationen an einer zentralen Stelle vorgenommen werden können.

Um eine rasche und einfache Rekonfiguration des Netzwerks während des Ablaufs vornehmem zu können, kann vorgesehen sein, dass das auf einem Rechner ablaufende Basisprogramm während des Ablaufs eines Ablaufsteuerungsprogramms bei Erhalt eines neuen Profildatensatzes die in diesem angegebenen Programme und/oder Schnittstellenprogramme und/oder Programmroutinen und/oder die Zuordnung bei Steuerrechnern oder Download-Servern abruft und nach dem Erhalt die erhaltenen Programme abspeichert und gegebenenfalls aufruft, und/oder die erhaltenen Schnittstellenprogramme abspeichert und gegebenenfalls startet, wobei die Schnittstellenprogramme auf die von den Programmen bereitgestellten Schnittstellen zugreift, und/oder die Programmroutinen im Programmspeicher abspeichert, und/oder jedem der Befehle des Domänen-Befehlssatzes jeweils zumindest eine Programmroutine entsprechend der erhaltenen Zuordnung zuweist.

Um einen Test an einem realen Kommunikationssystem vornehmen zu können, kann vorgesehen sein, dass zumindest zwei der Rechner des Netzwerks mit unterschiedlichen Kommunikationsnetzen und/oder Kommunikationsinfrastruktureinrichtungen in Datenverbindung stehen, wobei im Zuge des Testlaufs die Kommunikation von einem der Rechner des Netzwerks über das angeschlossene Kommunikationsnetz zu einem anderen Rechner des Netzwerks getestet wird, und wobei sich insbesondere die untersuchte Kommunikationsverbindung über mehrere miteinander verbundene Kommunikationsnetze erstreckt.

Eine besonders gute Skalierbarkeit kann auch bei verteilten Kommunikationsnetzen erreicht werden, indem die auf den Rechnern für die Profildatensätze ablaufenden Schnittstellenprogramme eine nach oben hin skalierbare Anzahl an Schnittstellen für den Zugriff auf die entsprechenden Programme bereitstellen und/oder
dass mehrere Computernetzwerke mit den darin befindlichen Rechnern des Automatisierungscluster hierarchisch zusammengefasst und von einem übergeordneten Steuerrechner für die Durchführung automatisierter Abläufe über mehrere Automatisierungscluster und deren Steuerrechner (3) hinweg verwendet werden.
Mit diesem Vorgehen kann auch ein realitätsnahes Testen von sehr großen Kommunikationssystemen erreicht werden.

Um einen Test an einem realen Kommunikationssystem vornehmen zu können, kann vorgesehen sein, dass zumindest zwei der Rechner des Netzwerks mit unterschiedlichen Kommunikationsnetzen und/oder Kommunikationsinfrastruktureinrichtungen in Datenverbindung stehen, dass der Testlauf den Test der Kommunikation von einem der Rechner des Netzwerks über das angeschlossene Kommunikationsnetz zu einem anderen Rechner des Netzwerks umfasst, und insbesondere dass sich die untersuchte Kommunikationsverbindung über mehrere miteinander verbundene Kommunikationsnetze erstreckt.

Softwaretests werden mit der Erfindung bevorzugt auf produktiven Systemen, d.h. auf Systemen, die auch für den letztlichen Einsatz der zu testenden Software genutzt werden, ausgeführt. Produktive Systeme sind typischerweise Endsysteme, die sich im Echt-Betrieb und nicht im Test-Betrieb befinden. Sie erlauben normalerweise im sicherheitskritischen Umfeld keine Stehzeiten, d.h. es wird durchgängiger ununterbrochener Betrieb gewährleistet. Bei produktiven Systemen sind typischerweise Veränderungen nicht erlaubt, das Einspielen von Testversionen für Systemkomponenten ist verboten. Software in produktiven Systemen wird typischerweise nur in sehr kurzen, definierten Zeitfenstern aktualisiert. Produktive Systeme werden typischerweise von Testumgebungen und/oder Testsystemen isoliert, damit zu testende Systemkomponenten keinen Schaden auf den produktiven Betrieb anrichten können. Produktive Systeme sollten aber möglichst ident durch Testumgebungen nachgebildet sein, um auf Testsystemen realitätsnah testen zu können. Produktive Systeme lassen sich jedoch vielfach nicht realitätsnah durch Testumgebungen abbilden. Deshalb kann es vorteilhaft sein, das im Betrieb befindliche System als Testsystem heranzuziehen, welches aber wiederum in einen Echt-Betrieb übergeht und somit auch keine Testversion oder spezielle Testumgebungen beherbergen kann. Produktive Systeme sind typischerweise nicht durch virtuelle oder virtualisierte Systeme realisiert, auf denen dem System, bestimmte Laufzeitumgebungen, oder auch Hardware simuliert wird.

Die Erfindung eignet sich auch für sogenannte System-Tests: Hierbei wird das gesamte System auf sämtliche Anforderungen getestet. Gewöhnlich findet der Test auf einer Testumgebung statt, bei der das produktive Endsystem simuliert wird bzw. die dem produktiven Endsystem möglichst ähnlich ist. Dieser Aspekt der Erfindung ermöglicht, dass man auf eine Testumgebung verzichten kann um direkt auf dem produktiven Endsystem die Systemtests usw. durchzuführen.

Eine bevorzugte Ausführungsform der Erfindung wird anhand der folgenden Zeichnungsfiguren näher dargestellt:

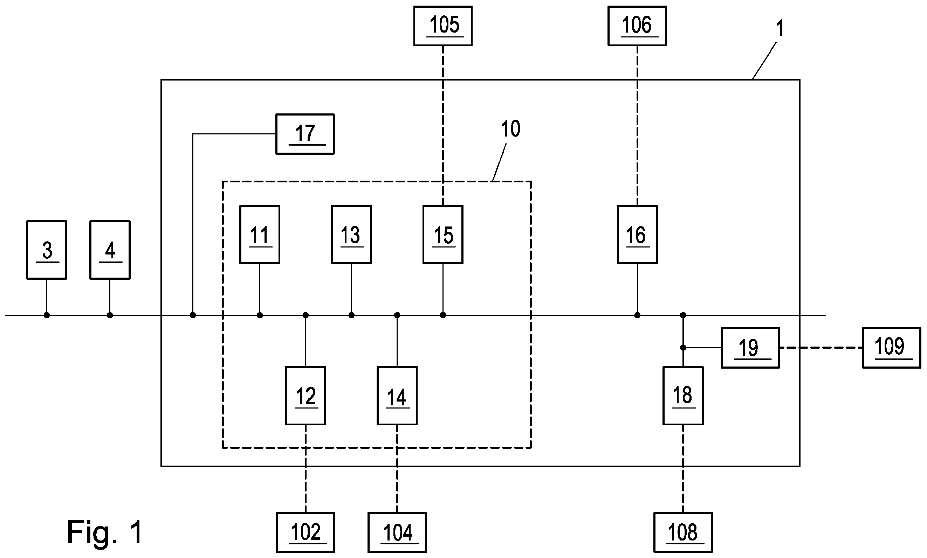

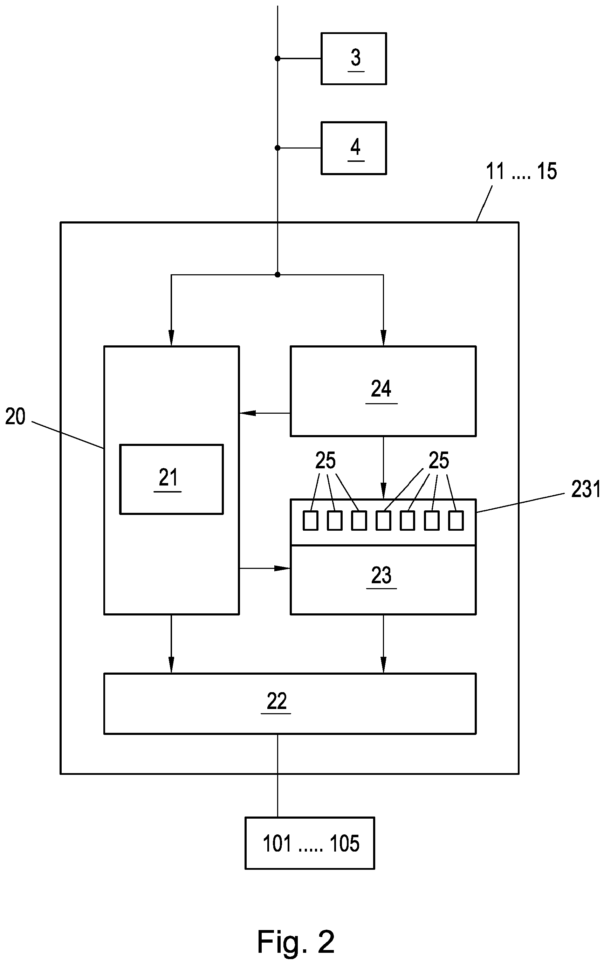

**Fig. 1** zeigt ein Computernetzwerk von Rechnern. **Fig. 2** zeigt schematisch die Datenkommunikation zwischen den auf einem Rechner des Computernetzwerks ablaufenden Programmen sowie die Datenkommunikation mit einem Steuerrechner.

In **Fig. 1** ist exemplarisch ein Kommunikationsnetzwerk mit einer Anzahl von Rechnern 11...19 dargestellt, die untereinander vernetzt sind. Jeder dieser Rechner 11...19 steht darüber hinaus über unterschiedliche Kommunikationswege mit unterschiedlichen Kommunikationsteilnehmern in Kommunikationsverbindung. Weiters ist in **Fig. 1** ein Steuerrechner 3 dargestellt, der mit den einzelnen Rechnern 11...19 über ein Netzwerk verbunden ist.

Alle Rechner 11...15, die bei der Durchführung von automatisierten Abläufen beim verteilten Computernetzwerk 1 mitwirken, werden zu einem Automatisierungscluster 10 zusammengefasst. Auf allen Rechnern 11...15 des Automatisierungsclusters 10 läuft jeweils ein Basisprogramm 20 ab, welches auf Anfrage eines Steuerrechners 3 mit diesem eine Datenkommunikationsverbindung aufbaut, um die benötigte Clusterkonfiguration für die Durchführung vorgesehener Automatisierungsszenarien zu laden. In einer im Steuerrechner 3 vorgesehenen Clusterkonfiguration sind die Computer 11...15, die über ein Basisprogramm 20 verfügen, für die Durchführung von Automatisierungsszenarien ausgewählt. Im vorliegenden Ausführungsbeispiel steht beispielsweise der Rechner 12, der an ein Telefonnetzwerk 102 angeschlossen ist zur automatisierten Behandlung von eingehenden Notrufen zur Verfügung. Ebenso steht der Rechner 14 über eine Internetverbindung mit einer weiteren Einsatzzentrale 104 eines Notdienstes in Verbindung. Der Rechner 15 steht über eine Digitalfunkverbindung mit den Einsatzkräften eines Bergnotdienstes 105 in Verbindung.

Auf den Rechnern 11...15 laufen jeweils ein oder mehrere Programme 22 (**Fig. 2**) des zu automatisierenden verteilten Systems ab, das über zumindest eine Schnittstelle zur Datenkommunikation verfügt oder diese festlegt oder anbietet. Über diese Schnittstelle kann das Programm 22 mit einem entsprechenden Schnittstellenprogramm 23 in Datenkommunikation treten.

Eine Möglichkeit einer Schnittstelle, mittels der das Programm 22 und das Schnittstellenprogramm 23 kommunizieren können sind z.B. eine Web-Oberfläche, ein Netzwerkprotokoll, eine Programmierschnittstelle wie etwa die Java-Schnittstelle, eine Benutzereingabeschnittstelle, usw. Die Art der zur Verfügung stehenden Schnittstelle eines Programms 22 bestimmt auch den Typ des dafür benötigten Schnittstellenprogramms 23, wobei die Anzahl der im Automatisierungscluster einsetzbaren Schnittstellenprogramme bzw. -typen beliebig erweiterbar ist.

Das jeweilige Schnittstellenprogramm 23 benötigt in der Regel auch eine spezifische Konfiguration um mit dem jeweiligen Programm 22 kommunizieren zu können. Als solche spezifische Information können beispielsweise Passwörter für verschlüsselte Datenübertagungen, Portnummern oder Ähnliches angegeben werden, um eine Datenübertagung zwischen dem Programm 22 und dem Schnittstellenprogramm 23 zu ermöglichen. Die Schnittstellenprogramme 23 selbst können vom Steuerrechner 3 heruntergeladen werden. Schnittstellenprogramme 23 dienen auch dazu, die Programme 22 zu überwachen, für die Automatisierung vorzubereiten, und diese nötigenfalls auch zu stoppen.

Schnittstellenprogramme 23 sind im Hinblick auf den automatischen Ablauf von Szenarien generisch, das heißt ohne jeglichen Bezug zur Domäne des zu automatisierenden Kundensystems. Erst die Programmierung des Schnittstellenprogramms 23 durch Programmroutinen 25 sowie die Zuordnung der Programmroutinen 25 zu Befehlen des domänenspezifischen Befehlssatzes D ermöglicht eine Anpassung an das zu automatisierende oder zu testende System. Damit wiederum wird es möglich die entsprechenden Ablaufszenarien und enthaltenen, direkt ausführbaren Automatisierungsschritte in der Domäne des Systems zu beschreiben.

Das Schnittstellenprogramm 23 ist dasjenige Programm, das unmittelbar mit dem ablaufenden Programm 22 über eine Schnittstelle interagiert. Das Schnittstellenprogramm 23 wird durch den Profildatensatz 21 ausgewählt welcher über das Basisprogramm 20 vom Steuerrechner 3 geladen und konfiguriert wird. Ein Profildatensatz 21 repräsentiert dabei jeweils ein zu automatisierendes Programm 22. D.h. ein Programm 22 wird durch das Anwenden des Profildatensatzes 21 für die Automatisierung vorbereitet indem dabei das ausgewählte Schnittstellenprogramm 23 beim Programm 22 eine Instrumentierung vornimmt und dabei das Programm 22 als Profil 21 im Automatisierungscluster zur Verfügung stellt. Durch das Vorhandensein des Profils 21 im Cluster beginnt die Möglichkeit des Schnittstellenprogramms 23, auf das Programm 22 einzuwirken bzw. den Zustand des Programms 22 abzufragen. Durch das Schnittstellenprogramm 23 wird somit eine Anpassung an das zu untersuchende Programm 22 vorgenommen. Das Schnittstellenprogramm 23 ist an die vom Programm 22 zur Verfügung gestellte Schnittstelle angepasst, weist jedoch einen Programmspeicher auf, in dem Programmroutinen 25 abgespeichert sind, die eine Programmierung oder Ansteuerung auf einem abstrakten Niveau ermöglichen. Die Programmroutinen 25 selbst sind in einem Basisbefehlssatz B angegeben bzw. implementiert, wobei einige Befehle b₁...bₙ des Basisbefehlssatzes B einen Zugriff über die Schnittstelle auf das zu untersuchende Programm 22 ermöglichen.

Für den automatisierten Betrieb wird ein Domänen-Befehlssatz D umfassend eine Anzahl von Befehlen d₁...dₙ festgelegt, wobei jedem der Befehle d₁...dₙ des Domänen-Befehlssatzes D jeweils zumindest eine im Programmspeicher 231 befindliche Programmroutine 25 zugeordnet wird. Das Schnittstellenprogramm 23 stellt somit einen Teil der Befehle des Domänen-Befehlssatzes D zur Verfügung, wobei diese Befehle des Domänen-Befehlssatzes jeweils im Programmspeicher 231 befindliche Programmroutinen 25 zugeordnet erhalten. Wie das Schnittstellenprogramm 23 mit den Programmroutinen 25 können auch die darauf aufbauenden Befehlssätze vom Steuerrechner 3 geladen werden. Die benötigten Befehlssätze werden wie das Schnittstellenprogramm 23 selbst im Profildatensatz 21 des Programms 22 ausgewählt.

Weiters wird für die konkrete Steuerung des automatisierten Ablaufs ein Ablaufsteuerungsprogramm 24 definiert bzw. vorgegeben. Das Ablaufsteuerungsprogramm 24 ist im Domänen-Befehlssatz D angegeben bzw. implementiert und wird über den Steuerrechner 3 an das Profil 21 im Automatisierungscluster zwecks Durchführung übermittelt. Wird vom Ablaufsteuerungsprogramm 24 ein Befehl d des Domänen-Befehlssatzes D verwendet, wird dieser ausgeführt und entsprechend der Programmierung der Programmroutine 25 das Schnittstellenprogramm 23 und letztlich das Programm 22 angesteuert. Dabei werden die einzelnen Befehle b dieser Programmroutine im Basisbefehlssatz B aufgerufen und über die gemeinsame Schnittstelle zwischen dem Programm 22 und dem Schnittstellenprogramm 23 an das Programm 22 übertragen und ausgeführt. Auf diese Weise kann eine Datenkommunikation zwischen dem Ablaufsteuerungsprogramm 24 und dem Programm 22 erzielt werden. Ein Ablaufsteuerprogramm 24 entspricht dabei üblicherweise einem einzelnen Automatisierungsschritt eines über das gesamte System verteilten Ablaufszenarios.

Der Domänen-Befehlssatz D ist auf einen konkreten Anwendungsfall abgestimmt und übernimmt dabei die Rolle eines Modellierungswerkzeuges und um den Bezug zur jeweiligen Domäne des zu automatisierenden Systems herzustellen. Vorteilhaft ist hierbei, dass diese Domäne zur Laufzeit angepasst und erweitert werden kann und somit unterschiedliche Automatisierungsszenarien durch unterschiedliche Ablaufsteuerungsprogramme ausgeführt werden können, ohne dass hierfür unterschiedliche Schnittstellenprogramme 23 zur Verfügung gestellt werden müssten. Schnittstellenprogramme 23 und Programme 22 sind dabei nicht speziell an die Interaktion mit dem Domain-Befehlssatz D angepasst wodurch ein generischer Zugriff auf zu automatisierende Programme 22 gleichen Schnittstellen-Typs möglich ist. Der Steuerrechner 3 übernimmt grundsätzlich die Ablaufsteuerung der einzelnen Ablaufsteuerungsprogramme 24 auf den Rechnern 11...15 und triggert deren Start bzw. deren Ende. Der Steuerrechner 3 stellt also eine zentrale Ablaufsteuerung dar wobei ein Automatisierungscluster 10 auch von mehreren Steuerrechnern parallel für die Durchführung von automatisierten Ablaufszenarien verwendet werden kann. Ebenso ist auch eine Aufteilung des Endsystems in mehrere Automatisierungscluster mit z.B. jeweils nur einem Steuerrechner 3 möglich.

Vor der Durchführung von systemweiten, automatisierten Ablaufszenarien werden vom Steuerrechner 3 die dafür benötigten Profile 21 (für Programme 22) aus dem Automatisierungscluster 10 "gebucht". Ein Ablaufszenario definiert dabei den Typ und die Anzahl erforderlicher Profile 21 bzw. auch weitere Kriterien, und nur wenn diese Profile im Cluster zur Verfügung stehen und eine "Buchung" aller Profile möglich ist wird das Ablaufszenario ausgeführt. Nach Beendigung des Ablaufszenarios werden die Profile 21 wieder im Automatisierungscluster freigegeben und stehen für nachfolgende Szenarien zur Verfügung. Somit ist auch eine Aufteilung eines Automatisierungsclusters 10 für den parallelen Betrieb mit mehreren Steuerrechnern 3 möglich, die sich mittels ihrer Profile 21 die Programme 22 für Ablaufszenarien im Cluster reservieren, ohne sich dabei in die Quere zu kommen. Gebuchte Profile 21 stehen exklusiv für das ausgeführte Szenario bereit und können von keinem weiteren gebucht werden solange sie nicht wieder freigegeben werden. Die Freigabe erfolgt in der Regel nach Beendigung des Szenarios, kann aber auch während des Szenarios erfolgen, genau so wie auch das Buchen eines Profils während eines Szenarios erfolgen kann.

Auf jedem der Rechner 11...15 innerhalb des Automatisierungsclusters 10 ist jeweils ein Basisprogramm 20 installiert. Dieses Basisprogramm 20 ermöglicht es dem Steuerrechner 3 über eine gemeinsame Schnittstelle auf die einzelnen Rechner 11...15 des Automatisierungsclusters 10 zuzugreifen. Das Basisprogramm 20 ist als auf den Rechner 11...15 ablaufender Dienst implementiert und wird vorab auf dem Rechner 11...15 installiert, um diesen bei Bedarf in einen Automatisierungscluster 10 einfügen zu können. Alle übrigen Software-Komponenten, Konfigurationsdateien oder andere Softwarepakete werden auf den Steuerrechner 3 bereitgestellt und vom Steuerrechner 3 bei Bedarf an den Rechner 11...15 verteilt. Hierbei kann es sich um Clusterkonfiguration, Profildatensätze 21, Programme 22, Schnittstellenprogramme 23, Programmroutinen 25, Basis- und Domänen-Befehlssätze BD und Ablaufsteuerungsprogramme 24 handeln. Die Ergebnisse der automatisierten Ablaufszenarien werden am Steuerrechner 3 gesammelt und gegebenenfalls auf diesem abgelegt, oder aber auch von diesem an weitere Systeme für eine nachfolgende Verarbeitung übergeben.

Läuft ein Basisprogramm 20 auf einem Rechner 11...15 ab, so informiert es nach dem Hochfahren den Steuerrechner 3 über seine Existenz. Der Steuerrechner 3 detektiert die Meldung des Basisprogramms 20, und der Rechner 11...15, auf dem das Basisprogramm 20 abläuft, steht für die Ausführung von automatisierten Szenarien zur Verfügung. Der Steuerrechner 3 veranlasst dabei über die Basisprogramme 20 die entsprechenden Rechner 11..15 in den Automatisierungscluster 10 aufzunehmen.

Zur Vorbereitung eines automatisierten Ablaufs wird vom Steuerrechner 3 an das im Rechner 11...15 ablaufende Basisprogramm 20 ein Profildatensatz 21 übermittelt, der Informationen hinsichtlich der beim automatisierten Ablauf benötigten Software-Komponenten aufweist, die letztlich auf dem Rechner des Basisprogramms 20 ablaufen sollen:
Der Profildatensatz 21 weist Informationen hinsichtlich des Programms 22 auf, das auf dem Rechner 11 im Zuge des automatisierten Ablaufs ablaufen soll. Im Zusammenhang mit der Angabe des Programms 22 können beispielsweise der Name des Programms 22, eine Installationsverzeichnis, ein Skript zum Starten oder zur Prozessidentifikation des Programms 22 für den Fall, dass das Programm 22 bereits auf dem Rechner 11 ...15 läuft, einen Download-Link für den Fall, dass das Programm 22 auf dem Rechner 11...15 noch nicht installiert ist, Installationsinformationen oder Deinstallationsinformationen enthalten. Sind sämtliche dieser Informationen bekannt, so kann das Basisprogramm 20 das auf dem Computer 11...15 während des automatisierten Ablaufszenarios zu überwachende, testende oder steuernde Programm 22 ablaufen lassen, starten, beenden, installieren, deinstallieren oder sonst auf dieses Programm 22 zugreifen.

Weiters enthält der Profildatensatz 21 Informationen hinsichtlich eines Schnittstellenprogramms 23, das mit dem Programm auf Anfrage eine Datenkommunikation ermöglicht. Üblicherweise ist ein derartiges Schnittstellenprogramm 23 nicht standardmäßig auf den einzelnen Rechnern installiert, sodass für das Schnittstellenprogramm 23 ein Download-Link, beispielsweise zum Herunterladen von Steuerrechner 3 sowie ein Installationsverzeichnis oder Installationspfad angegeben wird. Weiters können noch detaillierte Spezifikationen zur Anpassung des Schnittstellenprogramms 23 an jeweilige vom Programm 22 zur Verfügung gestellte Datenkommunikationsschnittstellen angegeben werden.

Weiters enthält der Profildatensatz 21 die Programmroutinen 25, die im Basisbefehlsdatensatz B implementiert sind, mit dem ein Zugriff auf die vom Schnittstellenprogramm 23 definierten Befehle ermöglicht wird. Das Schnittstellenprogramm 23 ermöglicht nämlich seinerseits den Aufruf oder die Ansteuerung von außen über eine Anzahl fest vorgegebener Basisbefehle b₁...bₙ, die zu einem Basisbefehlssatz B zusammengefasst sind. Das Schnittstellenprogramm 23 verwaltet einen Programmspeicher 231, in den eine Vielzahl von Programmroutinen 25 abgespeichert sind, die auf die Befehle b₁...bₙ des Basisbefehlssatz B zugreifen. Die einzelnen Programmroutinen 25 sind ihrerseits einzelnen Befehlen d₁...dₙ eines auf den Basisbefehlssatz B aufbauenden Domänen-Befehlssatzes D zugewiesen. Die einzelnen Einträge im Profildatensatz 21 werden vom Basisprogramm 20 verwaltet, das zu diesem Zweck einen diesbezüglichen Speicherplatz zur Verfügung stellt.

Darüber hinaus enthält der Profildatensatz 21 auch noch Angaben über die Funktionalität des zu automatisierenden Programms 22, sodass auf Anfrage vom Steuerrechner 3 an das entsprechende Profil 21 ermittelt werden kann, ob mit der vorgenommenen Konfiguration bzw. Instrumentierung des Programms 22 ein automatisiertes Ablaufszenario durchführbar ist.

Es ist in diesem Zusammenhang selbstverständlich auch möglich, während eines automatisierten Ablaufs eine vollständige Rekonfiguration eines Rechners 11 vorzunehmen, wobei während des Ablaufes ein unterschiedlicher Profildatensatz 21 auf den Rechner 11...15 geladen wird, das bislang ablaufende Programm 22, Schnittstellenprogramme 23 usw. beendet und deinstalliert werden und ausgehend vom neuen Profildatensatz 21 neue Programme 22, Schnittstellenprogramme 23, und Programmroutinen 25 auf den Rechner 11...15 geladen und gestartet werden. Programme 22 eines Rechners welche die gleiche Schnittstelle aufweisen können dabei über deren Profildatensätze 21 ein gemeinsames Schnittstellenprogramm 23 gleichen Typs verwenden. Programme 22 eines Rechners 11...15 mit unterschiedlicher Schnittstelle sind mit jeweils eigenem Schnittstellenprogramm 23 im Profiledatensatz 21 konfiguriert.

Der Steuerrechner 3 wählt vor dem Start der Automatisierungsszenarien die einzelnen dem Cluster 10 zugehörigen Rechner 11...15 aus und verteilt an diese Rechner 11...15 jeweils die Profildatensätze 21. Weiters hält der Steuerrechner 3 die Schnittstellenprogramme 23, Programmroutinen 25, die Zuordnung von Befehlen des Domänen-Befehlssatzes D zu Programmroutinen 25 sowie die Ablaufsteuerungsprogramme 24 und Ablaufszenarien zur Verfügung. Gegebenenfalls weist der Steuerrechner 3 auch externe Schnittstellen wie Web-Oberflächen usw. auf, mit denen einzelne Programme 22 oder Software-Komponenten im Zuge einer "continuous delivery", d.h. einer ständigen Programmoptimierung während des laufenden Systems, zur Verfügung gestellt werden. Zudem ist es über externe Schnittstellen auch über Fernzugriff möglich auf Automatisierungsergebnisse auf Kundensystemen zuzugreifen bzw. auf gesammelte Systemdaten, bzw. auch um die Durchführung genannter automatisierter Ablaufszenarien fernzusteuern.

Alternativ zu Steuerrechnern kann auch für sämtliche der herunterzuladenden Software-Komponenten wie Schnittstellenprogramme 23, Programme 22, Profiledatensätze 21 oder Programmroutinen 25, ein weiterer Download-Server 4 zur Verfügung gestellt werden, von dem aus die jeweiligen Komponenten heruntergeladen werden können.

Weitere Schnittstellenprogramme 23 können zur Laufzeit über den Steuerrechner 3 zur Verfügung gestellt werden. So können beispielsweise an die Rechner 11...15 Programme 22 übertragen und die Programme 22 auf den Rechnern 11...15 gestartet werden. Die Programme bieten wiederum eine neue Schnittstelle an, welche dann über ein entsprechend neues Schnittstellenprogramm 23 angesteuert wird. Das Schnittstellenprogramm 23 wird vom Steuerrechner 3 zur Verfügung gehalten. Der Profildatensatz 21 wird ergänzt, wobei das neue Programm 22 und das neue Schnittstellenprogramm 23 in den Profildatensatz 21 eingetragen werden. Der jeweilige Rechner 11...15 lädt über das Basisprogramm 20 mittels eines automatisierten Ablaufs, der als Installationsszenario bezeichnet wird, das betreffende Programm 22 und installiert dieses. Beim Starten des neuen Programms 22 über den entsprechenden Profildatensatz 21 werden in weiterer Folge auch das konfigurierte neue Schnittstellenprogramm 23 sowie Programmroutinen 25 und darauf aufbauende Befehlssätze vom Steuerrechner 3 geladen, und das neue Programm 22 steht somit im Automatisierungscluster für die Einbindung in automatisierte Ablaufszenarien zur Verfügung.

Dabei muss es sich bei Programmen 22 nicht ausschließlich um Komponenten des zu testenden Endsystems handeln, sondern es lassen sich auch weitere für die Durchführung der automatisierten Ablaufszenarien benötigte Programme bereitstellen bzw. auch wieder vom Endsystem entfernen. Es können dabei sowohl Programme 22, die beim produktiven Ablauf des Endsystems verwendet werden, als auch Programme, die zusätzlich am System für den automatisierten Ablauf für etwaige Analyse, Auswertung, Simulation oder Test benötigt werden, bereitgestellt und automatisiert ausgeführt werden.

Genauso einfach wie ein Automatisierungscluster 10 in einem Computernetzwerk 1 aufgebaut werden kann, ist es auch möglich über das Basisprogramm 20 die involvierten Rechner 11..15 aus dem Automatisierungscluster 10 wieder herauszunehmen und alle benötigten Software-Komponenten welche über den Steuerrechner 3 in den Automatisierungscluster 10 verteilt wurden von den Rechnern sauber zu entfernen, ohne aber den laufenden Betrieb des Endsystems zu behindern.

Ganz generell können die Rechner des Netzwerks mit unterschiedlichen Kommunikationsnetzen und Kommunikationsinfrastruktureinrichtungen in Datenverbindung stehen.

Eine Überprüfung der Kommunikation von einem der Rechner des Netzwerks über das angeschlossene Kommunikationsnetz zu einem anderen Rechner des Netzwerks kann somit vorgenommen werden. Dabei kann es auch vorkommen, dass sich die untersuchte Kommunikationsverbindung über mehrere miteinander verbundene Kommunikationsnetze erstreckt.

Der Automatisierungscluster kann auch in einem separaten Netzwerk bereitgestellt werden, welches nicht Teil des zu überprüfenden, operativen Systems ist, sondern über weitere Kommunikationsschnittstellen mit diesem in Datenverbindung steht.

Abhängig von verfügbarer Infrastruktur und Bandbreite des Netzwerkes ist es auch möglich mehrere eigenständige Automatisierungscluster hierarchisch zusammenzufassen um z.B. automatisierte Abläufe über mehrere Systemstandorte hinweg durchzuführen.

Um Systeme mit einer sehr großen Anzahl an Endpunkten bzw. Schnittstellen zu überprüfen ist vorgesehen, dass zusätzlich zur Skalierung über die Anzahl der Profile im Automatisierungscluster, auch die Anzahl der Schnittstellen, die mit einem Profile bearbeitet werden kann, nach oben hin skalierbar ist. Somit ist es möglich automatisierte Abläufe unter Verwendung zig-tausender Endpunkte durchzuführen um das System ganzheitlich bei realitätsnaher Auslastung zu überprüfen.

## Patentansprüche

1. Verfahren zur Steuerung eines automatisierten Testlaufs sowie gegebenenfalls die Bereitstellung der dafür benötigten Ablaufumgebung, in einem Computernetzwerk (1) umfassend eine Anzahl miteinander vernetzter Rechner (11...15), auf denen jeweils ein als ablaufender Dienst implementiertes Basisprogramm (20), das dazu eingerichtet ist, auf Anfrage eines Steuerrechners (3) mit diesem eine Datenkommunikationsverbindung aufzubauen und jeweils ein oder mehrere über das Computernetzwerk (1) zusammenwirkende, Programme (22) ablaufen, wobei diese Programme (22) jeweils eine vorgegebene Schnittstelle zur Ermöglichung einer Datenkommunikation mit dem jeweiligen Programm (22) zur Verfügung stellen,
a) wobei zur Vorbereitung eines automatisierten Ablaufs von zumindest einem Steuerrechner (3) an das im jeweiligen Rechner (11...15) ablaufende Basisprogramm (20) ein Profildatensatz (21) übermittelt wird,
- wobei der Profildatensatz (21) Informationen aufweist hinsichtlich eines Programms (22) das auf dem jeweiligen Rechner (11...15) im Zuge des automatisierten Ablaufs ablaufen soll, und
- wobei der Profildatensatz (21) Informationen enthält hinsichtlich eines Schnittstellenprogramms (23) das auf Anfrage eine Datenkommunikation mit dem jeweiligen Programm (22) ermöglicht,
b) wobei von dem zumindest einen mit dem System (1) verbundenen Steuerrechner (3) für zumindest eine der von den Programmen (22) auf dem jeweiligen Rechner (11...15) zur Verfügung gestellten Schnittstellen jeweils ein durch den Profildatensatz (21) gewähltes Schnittstellenprogramm (23) an den jeweiligen Rechner (11...15) übermittelt wird,
c) wobei das Schnittstellenprogramm (23) einen, die Schnittstelle betreffenden und an das jeweilige auf dem Rechner (11...15) ablaufende Programm (22) angepassten Basis-Befehlssatz (B) umfassend eine Anzahl von Basis-Befehlen (b₁...bₙ) zur Verfügung stellt,
d) wobei den Schnittstellenprogrammen (23) jeweils ein konfigurierbarer Programmspeicher (231) zum Abspeichern einer Anzahl von Basisbefehlen (b₁...bₙ) zugewiesen wird,
e) wobei vor dem oder während des automatischen Betriebs, insbesondere vom Steuerrechner (3), an das jeweilige Schnittstellenprogramm (23) jeweils eine Anzahl von Programmroutinen (25) übertragen und im Programmspeicher abgespeichert wird.
f) wobei die im Programmspeicher (231) befindlichen Programmroutinen (25) bei Aufruf auf die jeweiligen Schnittstellen mittels des Basis-Befehlssatzes (B) zugreifen,
g) wobei für den automatischen Betrieb ein Domänen-Befehlssatz (D) umfassend eine Anzahl von Befehlen (d₁...dₙ) festgelegt wird,
h) wobei jedem der Befehle (d₁...dₙ) des Domänen-Befehlssatzes (D) jeweils zumindest eine im Programmspeicher (231) befindliche Programmroutine (25) zugeordnet wird,
i) wobei der Domänen-Befehlssatz (D) vor dem oder während des automatischen Betriebs an das jeweilige Schnittstellenprogramm (23) übertragen wird,
j) wobei ein Ablaufsteuerungsprogramm (24) umfassend eine Anzahl im Domänen-Befehlssatz (D) festgelegten Befehlen, insbesondere vom Steuerrechner (3), an zumindest einen Rechner (11...15) übermittelt wird, und
k) wobei das Ablaufsteuerungsprogramm (24) auf dem Rechner (11...15) ausgeführt wird und bei Ausführung eines der Befehle (d₁...dₙ) des Domänen-Befehlssatzes (D) beim jeweiligen Rechner (11...15) jeweils von diesem Rechner (11...15) die dem jeweiligen Befehl (d₁...dₙ) zugeordnete in dessen Programmspeicher (231) abgespeicherte Programmroutine (25) ausgeführt wird
l) wobei der Steuerrechner (3) die zentrale Ablaufsteuerung der einzelnen Ablaufsteuerungsprogramme (24) auf den Rechnern (11...15) übernimmt und deren Start und/oder deren Ende triggert.

2. Verfahren nach einem der vorangehenden Ansprüche, **dadurch gekennzeichnet, dass** während des automatisierten Ablaufs, insbesondere nach der Ausführung zumindest eines Befehls (d₁...dₙ) des Domänen-Befehlssatzes (D)
- zumindest eine im Programmspeicher (231) eines Schnittstellenprogramms (23) befindliche Programmroutine (25) abgeändert oder entfernt wird, oder
- der Domänen-Befehlssatz (D) geändert wird, indem einem bestehenden Befehl (d₁...dₙ) eine andere Programmroutine (25) zugeordnet wird oder der Domänen-Befehlssatz (D) erweitert wird, indem ein neuer Befehl (d) vorgegeben wird und diesem eine neue oder bestehende Programmroutine (25) zugewiesen wird.

3. Verfahren nach einem der vorangehenden Ansprüche, **dadurch gekennzeichnet, dass** während der Ausführung eines Ablaufsteuerungsprogramms (24) ein auf dem jeweiligen Rechner (11...15) laufendes Programm (22) entfernt und durch ein weiteres Programm (22) ersetzt wird, das entweder dieselbe Schnittstelle für die Datenkommunikation verwendet wie das Programm (22) oder für das ein weiteres Schnittstellenprogramm (23) installiert wird, das eine Datenkommunikation mit dem weiteren Programm (22) ermöglicht.

4. Verfahren nach einem der vorangehenden Ansprüche, **dadurch gekennzeichnet, dass** während der Ausführung eines Ablaufsteuerungsprogramms (24) ein auf dem jeweiligen Rechner (11...15) laufendes Schnittstellenprogramm (23) entfernt und durch ein weiteres, dieselbe Schnittstelle für die Datenkommunikation verwendendes Schnittstellenprogramm (23) ersetzt wird.

5. Verfahren nach einem der vorangehenden Ansprüche, **dadurch gekennzeichnet,**
a) **dass** vor dem automatisierten Ablauf auf jedem der Rechner (11...15) des Systems (1) jeweils ein Basisprogramm (20) ausgeführt wird, das eine Datenkommunikation mit dem zumindest einen Steuerrechner (3) ermöglicht, wobei das Basisprogramm (20) einen Profildatenspeicher zur Abspeicherung eines Profildatensatzes (21) verwaltet,
b) **dass** der zumindest eine Steuerrechner (3) an die Basisprogramme (20) der Rechner (11...15), die für den automatisierten Ablauf herangezogen werden, jeweils einen Profildatensatz (21) übermittelt, der im Profildatenspeicher des jeweiligen Basisprogramms (20) abgespeichert wird, wobei der Profildatensatz (21) Informationen, insbesondere Zugriffsinformationen, über zumindest eines der folgenden Daten umfasst:
- das zumindest eine auszuführende Programm (22) sowie gegebenenfalls Information betreffend seinen Betrieb, seine Installation und/oder seine Überwachung und/oder
- das zumindest eine zu verwendende Schnittstellenprogramm (23) sowie eine Zuordnung zum jeweiligen auszuführenden Programm (22), und/oder
- die im Programmspeicher (231) abzuspeichernden Programmroutinen (25), und/oder
- eine Zuordnung von Programmroutinen (25) zu Befehlen (d₁...dₙ) des Domänen-Befehlssatzes (D),
c) **dass** die auf den Rechnern (11...15) ablaufenden Basisprogramme (20) die im Profildatensatz (21) angegebenen Programme (22) und/oder Schnittstellenprogramme (23) und/oder Programmroutinen (25) und/oder die Zuordnung von zumindest einem Steuerrechner (3) oder Download-Server (4) abfragen und übermittelt erhalten, und
- **dass** die auf den Rechnern (11...15) ablaufenden Basisprogramme (20) nach dem Erhalt
- die Programme (22) abspeichern und gegebenenfalls aufrufen, und/oder
- die Schnittstellenprogramme (23) abspeichern und gegebenenfalls starten, wobei die Schnittstellenprogramme (23) auf die von den Programmen (22) bereitgestellten Schnittstellen zugreifen, und/oder
- die Programmroutinen (25) im Programmspeicher (231) abspeichern, und/oder
- jedem der Befehle (d₁...dₙ) des Domänen-Befehlssatzes (D) jeweils zumindest eine Programmroutine (25) entsprechend der erhaltenen Zuordnung zuweisen, und
d) **dass** die auf den Rechnern (11...15) für die Profildatensätze (21) gestarteten Schnittstellenprogramme (23) einen Zugriff auf die entsprechenden Programme (22) für die Durchführung von automatisierten Ablaufszenarien durch die Ablaufsteuerungsprogramme (24) im Automatisierungscluster (10) bereitstellen.

6. Verfahren nach Anspruch 5, **dadurch gekennzeichnet, dass** während des Ablaufs eines Ablaufsteuerungsprogramms (24) dem jeweiligen Rechner (11...15) ein neuer Profildatensatz (21) übermittelt wird, und dass in diesem Fall die Schritte b), c) und d) erneut automatisiert durchgeführt werden.

7. Verfahren nach einem der Ansprüche 5 oder 6, **dadurch gekennzeichnet**
- **dass** bei einem automatischen Ablauf vorab eine Anzahl an benötigten Profilen (21) vorgegeben wird und aufgrund der Anzahl und Art der Profile (21) im Computernetzwerk (1) ein Automatisierungscluster (10) umfassend eine Anzahl von Rechnern (11...15) festgelegt wird, die für den automatischen Ablauf benötigt werden, wobei bei Erhalt des jeweiligen Profils (21) die in den einzelnen Profilen (21) festgelegten Programme (22), Schnittstellenprogramme (23) und/oder Programmroutinen (25) und/oder Zuordnungen auf den jeweiligen Rechnern (11...15) installiert und/oder gestartet werden, und dass gegebenenfalls nach dem automatisierten Ablauf der Automatisierungscluster (10) freigegeben wird und die Profile von den jeweiligen Rechnern entfernt werden, wobei vorzugsweise auch alle für die Durchführung benötigten, und insbesondere vom Steuerrechner (3) übermittelten, Programme (22), und/oder Schnittstellenprogramme (23) und/oder Programmroutinen (25) und/oder Zuordnungen, entfernt werden, und/oder
- **dass** nach der zuvor genannten Bereitstellung, insbesondere nach der Installation und/oder nach dem Start, der in den einzelnen Profilen (21) festgelegten Programme (22), Schnittstellenprogramme (23) und/oder Programmroutinen (25) und/oder Zuordnungen auf den jeweiligen Rechnern (11...15) das auf dem jeweiligen Rechner (11...15) befindliche Profil (21) für die Benutzung durch ein Ablaufszenario zur Verfügung steht und dass das jeweilige Profil (21) für die exklusive Benutzung im Rahmen eines Ablaufszenarios reserviert oder gebucht wird, und bis zur Freigabe nach der Beendigung des Ablaufszenarios ausschließlich von Befehlen im Rahmen desselben Ablaufszenarios benutzt wird.

8. Verfahren nach einem der vorangehenden Ansprüche, **dadurch gekennzeichnet, dass** auf den Rechnern des Computernetzwerks (1), die nicht zum Automatisierungscluster (10) zählen, dieselben Programme (22) im produktiven Betrieb ausgeführt werden wie sie auf den Rechnern des Automatisierungsclusters (10) für die Durchführung von automatisierten Ablaufszenarien verwendet werden.

9. Verfahren nach einem der Ansprüche 7 oder 8, **dadurch gekennzeichnet, dass** Rechner (11...15), auf denen einzelne Profildatensätze (21) installiert sind, und die einzelnen auf diesen Rechnern (11...15) ablaufenden Programme (22), Schnittstellenprogramme (23), Programmroutinen (25) und Zuordnungen von mehreren parallel ablaufenden automatischen Ablaufszenarien verwendet werden.

10. Computernetzwerk (1) umfassend eine Anzahl miteinander vernetzter Rechner (11...15), auf denen jeweils ein als ablaufender Dienst implementiertes Basisprogramm (20), das dazu eingerichtet ist, auf Anfrage eines Steuerrechners (3) mit diesem eine Datenkommunikationsverbindung aufzubauen und jeweils ein oder mehrere über das Computernetzwerk (1) zusammenwirkende, Programme (22) ablaufen, wobei diese Programme (22) jeweils eine vorgegebene Schnittstelle zur Ermöglichung einer Datenkommunikation mit dem jeweiligen Programm (22) zur Verfügung stellen,
- wobei das System (1) zumindest einen Steuerrechner (3) aufweist, wobei der zumindest eine Steuerrechner (3) dazu ausgebildet ist, zur Vorbereitung eines automatisierten Ablaufs an das im jeweiligen Rechner (11...15) ablaufende Basisprogramm (20) einen Profildatensatz (21) zu übermitteln,
- wobei der Profildatensatz (21) Informationen aufweist hinsichtlich eines Programms (22) das auf dem jeweiligen Rechner (11...15) im Zuge des automatisierten Ablaufs ablaufen soll, und
- wobei der Profildatensatz (21) Informationen enthält hinsichtlich eines Schnittstellenprogramms (23) das auf Anfrage eine Datenkommunikation mit dem jeweiligen Programm (22) ermöglicht,
- wobei auf zumindest einem Rechner (11...15) ein durch den Profildatensatz (21) gewähltes Schnittstellenprogramm (23) abläuft, das auf die vom Programm (22) zur Verfügung gestellte Schnittstelle zugreift und auf Anfrage eine Datenkommunikation mit dem jeweiligen Programm (22) ermöglicht, und
- wobei das Schnittstellenprogramm (23) einen, die Schnittstelle betreffenden und an das jeweilige auf dem Rechner (11...15) ablaufende Programm (22) angepassten Basis-Befehlssatz (B) umfassend eine Anzahl von Basis-Befehlen (b₁...bₙ) zur Verfügung stellt,
- wobei den Schnittstellenprogrammen (23) jeweils ein konfigurierbarer Programmspeicher (231) zum Abspeichern einer Anzahl von Basisbefehlen (b₁...bₙ) zugewiesen ist, in dem eine Anzahl von Programmroutinen (25) abgespeichert ist,
- wobei die im Programmspeicher (231) befindlichen Programmroutinen (25) bei Aufruf auf die jeweiligen Schnittstellen mittels des Basis-Befehlssatzes (B) zugreifen,
- wobei für den automatischen Betrieb ein Domänen-Befehlssatz (D) umfassend eine Anzahl von Befehlen (d₁...dₙ) festgelegt ist,
- wobei jedem der Befehle (d₁...dₙ) des Domänen-Befehlssatzes (D) jeweils zumindest eine im Programmspeicher (231) befindliche Programmroutine (25) zugeordnet ist,
- wobei ein Ablaufsteuerungsprogramm (24) umfassend eine Anzahl im Domänen-Befehlssatz (D) festgelegten Befehlen im Speicher des Rechners (11...15) abgespeichert ist,
- wobei der Rechner (11...15) das Ablaufsteuerungsprogramm (24) ausführt und der Rechner (11...15) bei Ausführung eines der Befehle (d₁...dₙ) des Domänen-Befehlssatzes (D) die dem jeweiligen Befehl (d₁...dₙ) zugeordnete in dessen Programmspeicher (231) abgespeicherte Programmroutine (25) ausführt. ,
- wobei der Steuerrechner die zentrale Ablaufsteuerung der einzelnen Ablaufsteuerungsprogramme auf den Rechnern übernimmt und deren Start und/oder deren Ende triggert.

11. Computernetzwerk (1) nach Anspruch 10, **dadurch gekennzeichnet, dass** die Rechner (11...15) während des automatisierten Ablaufs, insbesondere nach der Ausführung zumindest eines Befehls (d₁...dₙ) des Domänen-Befehlssatzes (D)
- zumindest eine im Programmspeicher (231) eines Schnittstellenprogramms (23) befindliche Programmroutine (25) abändern oder entfernen, oder
- den Domänen-Befehlssatz (D) ändern, indem sie einem bestehenden Befehl (d₁...dₙ) eine andere Programmroutine (25) zuordnen oder den Domänen-Befehlssatz (D) erweitern, indem sie einen neuen Befehl (d) vorgegeben und diesem eine neue oder bestehende Programmroutine (25) zuweisen.

12. Computernetzwerk (1) nach einem der Ansprüche 10 oder 11, **dadurch gekennzeichnet, dass** die Rechner (11...15) während der Ausführung eines Ablaufsteuerungsprogramms (24) ein auf dem jeweiligen Rechner (11...15) laufendes Programm (22) entfernen und
durch ein weiteres Programm (22) ersetzen, wobei dieses weitere Programm (22) entweder dieselbe Schnittstelle verwendet wie das entfernte Programm oder der jeweilige Rechner (11...15) ein neues Schnittstellenprogramm 23 installiert, das eine Datenkommunikation mit dem weiteren Programm 22 ermöglicht.

13. Computernetzwerk (1) nach einem der Ansprüche 10 bis 12, **dadurch gekennzeichnet, dass** die Rechner (11...15) während der Ausführung eines Ablaufsteuerungsprogramms (24) ein auf dem jeweiligen Rechner (11...15) laufendes Schnittstellenprogramm (23) entfernen und durch ein weiteres, dieselbe Schnittstelle für die Datenkommunikation verwendendes Schnittstellenprogramm (23) ersetzen.

14. Computernetzwerk (1) nach einem der Ansprüche 10 bis 13, **dadurch gekennzeichnet**, a) dass auf jedem der Rechner (11...15) des Systems (1) jeweils ein Basisprogramm (20) abläuft, das eine Datenkommunikation mit dem zumindest einen Steuerrechner (3) ermöglicht, wobei das Basisprogramm (20) einen Profildatenspeicher zur Abspeicherung eines Profildatensatzes (21) verwaltet,
b) dass für den automatisierten Ablauf ein Profildatensatz (21) zur Verfügung steht, der Informationen, insbesondere Zugriffsinformationen, über zumindest eines der folgenden Daten umfasst:
- das zumindest eine auszuführende Programm (22) sowie Angaben zum Betrieb, zu seiner Installation und/oder zu seiner Überwachung, und/oder
- das zumindest eine zu verwendende Schnittstellenprogramm (23) sowie eine Zuordnung zum jeweiligen auszuführenden Programm (22), und/oder
- die im Programmspeicher (231) abzuspeichernden Programmroutinen (25), und/oder
- eine Zuordnung von Programmroutinen (25) zu Befehlen (d₁...dₙ) des Domänen-Befehlssatzes (D).

15. Computernetzwerk (1) nach Anspruch 14, **dadurch gekennzeichnet, dass** das auf einem Rechner (11...15) ablaufende Basisprogramm (20) während des Ablaufs eines Ablaufsteuerungsprogramms (24) bei Erhalt eines neuen Profildatensatzes (21) die in diesem angegebenen Programme (22) und/oder Schnittstellenprogramme (23) und/oder Programmroutinen (25) und/oder die Zuordnung bei Steuerrechnern (3) oder Download-Servern (4) abruft und nach dem Erhalt
- die erhaltenen Programme (22) abspeichert und gegebenenfalls aufruft, und/oder
- die erhaltenen Schnittstellenprogramme (23) abspeichert und gegebenenfalls startet, wobei die Schnittstellenprogramme (23) auf die von den Programmen (22) bereitgestellten Schnittstellen zugreift, und/oder
- die Programmroutinen (25) im Programmspeicher (231) abspeichert, und/oder
- jedem der Befehle (d₁...dₙ) des Domänen-Befehlssatzes (D) jeweils zumindest eine Programmroutine (25) entsprechend der erhaltenen Zuordnung zuweist.

16. Verfahren nach einem der Ansprüche 1 bis 9, **dadurch gekennzeichnet, dass** zumindest zwei der Rechner des Netzwerks mit unterschiedlichen Kommunikationsnetzen und/oder Kommunikationsinfrastuktureinrichtungen in Datenverbindung stehen,
wobei im Zuge des Testlaufs die Kommunikation von einem der Rechner des Netzwerks über das angeschlossene Kommunikationsnetz zu einem anderen Rechner des Netzwerks getestet wird,
wobei sich insbesondere die untersuchte Kommunikationsverbindung über mehrere miteinander verbundene Kommunikationsnetze erstreckt.

17. Verfahren nach einem der Ansprüche 1 bis 9 oder 16, **dadurch gekennzeichnet, dass** die auf den Rechnern (11...15) für die Profildatensätze (21) ablaufenden Schnittstellenprogramme (23) eine nach oben hin skalierbare Anzahl an Schnittstellen für den Zugriff auf die entsprechenden Programme (22) bereitstellen und/oder dass mehrere Computernetzwerke (1) mit den darin befindlichen Rechnern (11...15) des Automatisierungscluster hierarchisch zusammengefasst und von einem übergeordneten Steuerrechner (3) für die Durchführung automatisierter Abläufe über mehrere Automatisierungscluster und deren Steuerrechner (3) hinweg verwendet werden.

18. Computernetzwerk (1) nach einem der Ansprüche 10 bis 15, **dadurch gekennzeichnet, dass** zumindest zwei der Rechner des Netzwerks mit unterschiedlichen Kommunikationsnetzen und/oder Kommunikationsinfrastuktureinrichtungen in Datenverbindung stehen,
- dass der Testlauf den Test der Kommunikation von einem der Rechner des Netzwerks über das angeschlossene Kommunikationsnetz zu einem anderen Rechner des Netzwerks umfasst, und insbesondere
- dass sich die untersuchte Kommunikationsverbindung über mehrere miteinander verbundene Kommunikationsnetze erstreckt.

## Claims

1. Method for controlling an automated test run and, as appropriate, the provision of the runtime environment required therefor, in a computer network (1) comprising a number of computers (11...15) that are networked together, on each of which run a basic program (20) that is implemented as a running service, which is adapted to establish, upon request of a control computer (3), a data communication link therewith, and one or more programs (22) that interact via the computer network (1), wherein these programs (22) each provide a specified interface for enabling data communication with the respective program (22),
a) wherein in preparation for an automated process a profile data set (21) is transmitted from at least one control computer (3) to the basic program (20) running in the respective computer (11...15),
- wherein the profile data set (21) comprises information regarding a program (22) that is to run on the respective computer (11...15) in the course of the automated process, and
- wherein the profile data set (21) contains information regarding an interface program (23) that upon request enables data communication with the respective program (22),
b) wherein an interface program (23) selected by the profile data set is transmitted to the respective computer (11...15) from the at least one control computer (3) that is connected to the system (1) for at least one of the interfaces provided by the programs (22) on the respective computer (11...15),
c) wherein the interface program (23) provides a basic instruction set (B), comprising a number of basic instructions (b₁...bₙ), relating to the interface and matched to the respective program (22) that is running on the computer (11...15),
d) wherein a configurable program memory (231) for storing a number of basic instructions (b₁...bₙ) is allocated to each of the interface programs (23),
e) wherein, prior to or during the automatic operation, in particular from the control computer (3), a number of program routines (25) are transferred to the respective interface program (23) and stored in the program memory,
f) wherein the program routines (25) located in the program memory (231), when called upon, access the respective interfaces by means of the basic instruction set (B),
g) wherein for the automatic operation a domain instruction set (D) comprising a number of instructions (d₁...dₙ) is defined,
h) wherein at least one program routine (25) located in the program memory (231) is assigned to each of the instructions (d₁...dₙ) of the domain instruction set (D),
i) wherein the domain instruction set (D) is transferred, prior to or during automatic operation, to the respective interface program (23),
j) wherein a process control program (24) comprising a number of instructions defined in the domain instruction set (D) is transmitted, in particular from the control computer (3), to at least one computer (11...15), and
k) wherein the process control program (24) is executed on the computer (11...15) and in each case, when one of the instructions (d₁...dₙ) of the domain instruction set (D) is executed on the respective computer (11...15), the program routine (25) assigned to the respective instruction (d₁...dₙ) and stored in its program memory (231) is executed by this computer (11...15)
l) wherein the control computer (3) takes over the central process control of the individual process control programs (24) on the computers (11...15) and triggers their start and/or their end.

2. Method according to any one of the preceding claims, **characterised in that** during the automated process, in particular after execution of at least one instruction (d₁...dₙ) of the domain instruction set (D)
- at least one program routine (25) located in the program memory (231) of an interface program (23) is modified or removed, or
- the domain instruction set (D) is changed by assigning another program routine (25) to an existing instruction (d₁...dₙ) or the domain instruction set (D) is extended by specifying a new instruction (d) and allocating a new or existing program routine (25) to it.

3. Method according to any one of the preceding claims, **characterised in that**, during the execution of a process control program (24), a program (22) running on the respective computer (11...15) is removed and replaced by a further program (22), which either uses the same interface for data communication as the program (22) or for which a further interface program (23) is installed that enables data communication with the further program (22).

4. Method according to any one of the preceding claims, **characterised in that**, during the execution of a process control program (24), an interface program (23) running on the respective computer (11...15) is removed and replaced by another interface program (23) using the same interface for data communication.

5. Method according to any one of the preceding claims, **characterised in that**,
a) prior to the automated process, a respective basic program (20) is executed on each of the computers (11...15) of the system (1), which basic program enables data communication with the at least one control computer (3), wherein the basic program (20) manages a profile data memory for storage of a profile data set (21),
b) the at least one control computer (3) transmits to the basic programs (20) of the computers (11...15) which are used for the automated process a respective profile data set (21) that is stored in the profile data memory of the respective basic program (20), wherein the profile data set (21) comprises information, in particular access information, about at least one of the following data:
- the at least one program (22) that is to be executed and, as appropriate, information relating to its operation, its installation and/or its monitoring, and/or
- the at least one interface program (23) that is to be used and an assignment to the respective program (22) that is to be executed, and/or
- the program routines (25) that are to be stored in the program memory (231), and/or
- an assignment of program routines (25) to instructions (d₁...dₙ) of the domain instruction set (D),
c) the basic programs (20) running on the computers (11...15) call up and receive transmitted the programs (22) and/or interface programs (23) and/or program routines (25) specified in the profile data set (21) and/or the assignment from at least one control computer (3) or download server (4), and
- after the receipt, the basic programs (20) running on the computers (11...15),
- store and, as appropriate, call up the programs (22), and/or
- store and, as appropriate, start the interface programs (23), wherein the interface programs (23) access the interfaces provided by the programs (22), and/or
- store the program routines (25) in the program memory (231), and/or
- assign to each of the instructions (d₁...dₙ) of the domain instruction set (D) at least one respective program routine (25) according to the received assignment, and
d) the interface programs (23) started on the computers (11...15) for the profile data sets (21) provide access to the corresponding programs (22) for the performance of automated process scenarios by the process control programs (24) in the automation cluster (10).

6. Method according to claim 5, **characterised in that**, during the running of a process control program (24), a new profile data set (21) is transmitted to the respective computer (11...15), and **in that**, in this case, steps b), c) and d) are performed again automatically.

7. Method according to any one of claims 5 or 6, **characterised in that**
- in the case of an automatic process, a number of required profiles (21) is specified in advance and, on the basis of the number and type of the profiles (21), an automation cluster (10) comprising a number of computers (11...15) which are required for the automatic process is defined in the computer network (1), wherein upon receipt of the respective profile (21) the programs (22), interface programs (23) and/or program routines (25) and/or assignments defined in the individual profiles (21) are installed and/or started on the respective computers (11...15), and, as appropriate, after the automated process the automation cluster (10) is released and the profiles are removed from the respective computers, wherein preferably all the programs (22) and/or interface programs (23) and/or program routines (25) and/or assignments required for the execution, and in particular transmitted from the control computer (3), are also removed, and/or
- after the aforementioned provision, in particular after the installation and/or after the start, of the programs (22), interface programs (23) and/or program routines (25) and/or assignments defined in the individual profiles (21) on the respective computers (11...15), the profile (21) located on the respective computer (11...15) is available for use by a process scenario and the respective profile (21) is reserved or booked for exclusive use within the scope of a process scenario and is used exclusively by instructions within the scope of the same process scenario until it is released after termination of the process scenario.

8. Method according to any one of the preceding claims, **characterised in that** the same programs (22) are executed in productive operation on the computers of the computer network (1) that do not belong to the automation cluster (10) as are used on the computers of the automation cluster (10) for performance of automated process scenarios.

9. Method according to any one of claims 7 or 8, **characterised in that** computers (11...15) on which individual profile data sets (21) are installed, and the individual programs (22), interface programs (23), program routines (25) and assignments running on these computers (11...15) are used by a plurality of automatic process scenarios running in parallel.

10. Computer network (1) comprising a number of computers (11...15) that are networked together and on each of which run a basic program (20) that is implemented as a running service, which is adapted to establish, upon request of a control computer (3), a data communication link therewith, and one or more programs (22) that interact via the computer network (1), wherein these programs (22) each provide a specified interface for enabling data communication with the respective program (22),
- wherein the system (1) has at least one control computer (3), wherein the at least one control computer (3) is configured to transmit, in preparation for an automated process, a profile data set (21) to the basic program (20) running in the respective computer (11...15),
- wherein the profile data set (21) comprises information regarding a program (22) that is to run on the respective computer (11...15) in the course of the automated process, and
- wherein the profile data set (21) contains information regarding an interface program (23) that upon request enables data communication with the respective program (22),
- wherein an interface program (23) selected by the profile data set runs on at least one computer (11...15), which interface program accesses the interface provided by the program (22) and upon request enables data communication with the respective program (22), and
- wherein the interface program (23) provides a basic instruction set (B), comprising a number of basic instructions (b₁...bₙ), relating to the interface and matched to the respective program (22) that is running on the computer (11...15),
- wherein a configurable program memory (231) for storing a number of basic instructions (b₁...bₙ), in which a number of program routines (25) is stored, is allocated to each of the interface programs (23),
- wherein the program routines (25) located in the program memory (231) access, when called upon, the respective interfaces by means of the basic instruction set (B),
- wherein for the automatic operation a domain instruction set (D) comprising a number of instructions (d₁...dₙ) is defined,
- wherein at least one program routine (25) located in the program memory (231) is assigned to each of the instructions (d₁...dₙ) of the domain instruction set (D),
- wherein a process control program (24) comprising a number of instructions defined in the domain instruction set (D) is stored in the memory of the computer (11...15),
- wherein the computer (11...15) executes the process control program (24) and the computer (11...15), upon execution of one of the instructions (d₁...dₙ) of the domain instruction set (D), executes the program routine (25) assigned to the respective instruction (d₁...dₙ) stored in its program memory (231),
- wherein the control computer takes over the central process control of the individual process control programs on the computers and triggers their start and/or their end.

11. Computer network (1) according to claim 10, **characterised in that** during the automated process, in particular after the execution of at least one instruction (d₁...dₙ) of the domain instruction set (D), the computers (11...15)
- modify or remove at least one program routine (25) located in the program memory (231) of an interface program (23), or
- modify the domain instruction set (D) by assigning another program routine (25) to an existing instruction (d₁...dₙ) or extend the domain instruction set (D) by specifying a new instruction (d) and allocating a new or existing program routine (25) to it.

12. Computer network (1) according to any one of claims 10 or 11, **characterised in that**, during the execution of a process control program (24), the computers (11...15) remove a program (22) running on the respective computer (11...15), and
replace it by a further program (22), wherein this further program (22) either uses the same interface as the removed program or the respective computer (11...15) installs a new interface program 23 that enables data communication with the further program 22.

13. Computer network (1) according to any one of claims 10 to 12, **characterised in that**, during the execution of a process control program (24), the computers (11...15) remove an interface program (23) running on the respective computer (11...15) and replace it with a further interface program (23) using the same interface for data communication.

14. Computer network (1) according to any one of claims 10 to 13, **characterised in that**,
a) a respective basic program (20) runs on each of the computers (11...15) of the system (1), which basic program enables data communication with the at least one control computer (3), wherein the basic program (20) manages a profile data memory for storing a profile data set (21),
b) a profile data set (21) is available for the automated process, which comprises information, in particular access information, about at least one of the following data:
- the at least one program (22) that is to be executed and information on its operation, its installation and/or its monitoring, and/or
- the at least one interface program (23) that is to be used and an assignment to the respective program (22) that is to be executed, and/or
- the program routines (25) that are to be stored in the program memory (231), and/or
- an assignment of program routines (25) to instructions (d₁...dₙ) of the domain instruction set (D).

15. Computer network (1) according to claim 14, **characterised in that** the basic program (20) running on a computer (11...15), during the running of a process control program (24), upon receipt of a new profile data set (21), calls upon the programs (22) and/or interface programs (23) and/or program routines (25) set out therein and/or the assignment at control computers (3) or download servers (4) and, after the receipt
- stores and, as appropriate, calls upon the received programs (22), and/or
- stores and, as appropriate, starts the received interface programs (23), wherein the interface programs (23) access the interfaces provided by the programs (22), and/or
- stores the program routines (25) in the program memory (231), and/or
- assigns to each of the instructions (d₁...dₙ) of the domain instruction set (D) at least one respective program routine (25) in accordance with the received assignment.

16. Method according to any one of claims 1 to 9, **characterised in that** at least two of the computers of the network are in data connection with different communication networks and/or communication infrastructure facilities,
wherein in the course of the test run the communication from one of the computers of the network via the connected communication network to another computer of the network is tested,
wherein, in particular, the communications link under investigation extends over a plurality of interconnected communications networks.

17. Method according to any one of claims 1 to 9 or 16, **characterised in that** the interface programs (23) for the profile data sets (21) running on the computers (11...15) provide an upwardly scalable number of interfaces for access to the corresponding programs (22) and/or
a plurality of computer networks (1), with the computers (11...15) of the automation cluster located therein are hierarchically combined and used by a higher-level control computer (3) for carrying out automated processes across a plurality of automation clusters and their control computers (3).

18. Computer network (1) according to any one of claims 10 to 15, **characterised in that** at least two of the computers of the network are in data connection with different communication networks and/or communication infrastructure facilities,
- the test run comprises testing the communication from one of the computers of the network via the connected communication network to another computer of the network, and in particular
- the communication link under investigation extends over a plurality of interconnected communication networks.

## Revendications

1. Procédé pour commander une exécution de test automatisée ainsi que, le cas échéant, la fourniture de l'environnement d'exécution nécessaire à cet effet, dans un réseau informatique (1) comprenant un certain nombre d'ordinateurs interconnectés (11...15), sur lesquels s'exécutent respectivement un programme de base (20) mis en œuvre en tant que service s'exécutant, qui est configuré pour établir une liaison de communication de données avec un ordinateur de commande (3) à la demande de celui-ci, et respectivement un ou plusieurs programmes (22) interagissant par l'intermédiaire du réseau informatique (1), dans lequel ces programmes (22) mettent à disposition respectivement une interface prédéterminée pour permettre une communication de données avec le programme (22) respectif,
a) dans lequel un jeu de données de profil (21) est transmis par au moins un ordinateur de commande (3) au programme de base (20) s'exécutant dans l'ordinateur respectif (11...15) pour préparer une exécution automatisée,
- dans lequel le jeu de données de profil (21) présente des informations concernant un programme (22) qui doit être exécuté sur l'ordinateur respectif (11...15) au cours de l'exécution automatisée, et
- dans lequel le jeu de données de profil (21) contient des informations concernant un programme d'interface (23) qui permet une communication de données avec le programme respectif (22) sur demande,
b) dans lequel un programme d'interface (23) sélectionné par le jeu de données de profil (21) est transmis à l'ordinateur respectif (11...15) par l'au moins un ordinateur de commande (3) connecté au système (1) pour au moins une des interfaces mises à disposition par les programmes (22) sur l'ordinateur respectif (11...15),
c) dans lequel le programme d'interface (23) met à disposition un jeu d'instructions de base (B) relatif à l'interface et adapté au programme respectif (22) s'exécutant sur l'ordinateur (11...15), comprenant un certain nombre d'instructions de base (b₁...bₙ),
d) dans lequel une mémoire de programme configurable (231) est attribuée aux programmes d'interface (23) respectivement pour le stockage d'un certain nombre d'instructions de base (b₁...bₙ),
e) dans lequel, avant ou pendant le fonctionnement automatique, en particulier par l'ordinateur de commande (3), un certain nombre de routines de programme (25) sont transmises au programme d'interface respectif (23) et enregistrées dans la mémoire de programme,
f) dans lequel les routines de programme (25) se trouvant dans la mémoire de programme (231), lorsqu'elles sont appelées, accèdent aux interfaces respectives au moyen du jeu d'instructions de base (B),
g) dans lequel un jeu d'instructions de domaine (D) comprenant un certain nombre d'instructions (d₁...dₙ) est spécifié pour le fonctionnement automatique,
h) dans lequel chacune des instructions (d₁...dₙ) du jeu d'instructions de domaine (D) est affectée à au moins une routine de programme (25) se trouvant dans la mémoire de programme (231),
i) dans lequel le jeu d'instructions de domaine (D) est transmis au programme d'interface respectif (23) avant ou pendant le fonctionnement automatique,
j) dans lequel un programme de commande d'exécution (24) comprenant un certain nombre d'instructions spécifiées dans le jeu d'instructions de domaine (D) est transmis, en particulier à partir de l'ordinateur de commande (3), à au moins un ordinateur (11...15), et
k) dans lequel le programme de commande d'exécution (24) est exécuté sur l'ordinateur (11...15) et, lorsqu'une des instructions (d₁...dₙ) du jeu d'instructions du domaine (D) est exécutée sur l'ordinateur respectif (11...15), la routine de programme (25) affectée à l'instruction respective (d₁...dₙ) et stockée dans sa mémoire de programme (231) est exécutée respectivement par cet ordinateur (11...15),
l) dans lequel l'ordinateur de commande (3) prend en charge la commande d'exécution centrale des programmes de commande d'exécution individuels (24) sur les ordinateurs (11...15) et déclenche leur début et/ou leur fin.

2. Procédé selon l'une quelconque des revendications précédentes, **caractérisé en ce que**, pendant l'exécution automatisée, en particulier après la mise en œuvre d'au moins une instruction (d₁...dₙ) du jeu d'instructions du domaine (D),
- au moins une routine de programme (25) se trouvant dans la mémoire de programme (231) d'un programme d'interface (23) est modifiée ou supprimée, ou
- le jeu d'instructions du domaine (D) est modifié **en ce qu'**une autre routine de programme (25) est affectée à une instruction existante (d₁...dₙ) ou le jeu d'instructions du domaine (D) est étendu **en ce qu'**une nouvelle instruction (d) est spécifiée et lui affecte une routine de programme nouvelle ou existante (25).

3. Procédé selon l'une quelconque des revendications précédentes, **caractérisé en ce que**, pendant la mise en œuvre d'un programme de commande d'exécution (24), un programme (22) fonctionnant sur l'ordinateur respectif (11...15) est supprimé et remplacé par un autre programme (22) qui soit utilise la même interface pour la communication de données que le programme (22), soit pour lequel un autre programme d'interface (23) est installé, qui permet une communication de données avec l'autre programme (22).

4. Procédé selon l'une quelconque des revendications précédentes, **caractérisé en ce que**, pendant la mise en œuvre d'un programme de commande d'exécution (24), un programme d'interface (23) fonctionnant sur l'ordinateur respectif (11...15) est supprimé et remplacé par un autre programme d'interface (23) utilisant la même interface pour la communication de données.

5. Procédé selon l'une quelconque des revendications précédentes, **caractérisé en ce**
a) **qu'**avant l'exécution automatisée sur chacun des ordinateurs (11...15) du système (1), respectivement un programme de base (20) est mis en œuvre, qui permet une communication de données avec l'au moins un ordinateur de commande (3), dans lequel le programme de base (20) gère une mémoire de données de profil pour stocker un jeu de données de profil (21),
b) **que** l'au moins un ordinateur de commande (3) transmet aux programmes de base (20) des ordinateurs (11...15) qui sont utilisés pour l'exécution automatisée respectivement un jeu de données de profil (21) qui est enregistré dans la mémoire de données de profil du programme de base (20) respectif, dans lequel le jeu de données de profil (21) comprend des informations, en particulier des informations d'accès, sur au moins une des données suivantes :
- l'au moins un programme (22) à mettre en œuvre ainsi que, le cas échéant, des informations concernant son fonctionnement, son installation et/ou sa surveillance, et/ou
- l'au moins un programme d'interface (23) à utiliser ainsi qu'une affectation au programme (22) à mettre en œuvre respectif, et/ou
- les routines de programme (25) à stocker dans la mémoire de programme (231), et/ou
- une affectation de routines de programme (25) à des instructions (d₁...dₙ) du jeu d'instructions de domaine (D),
c) **que** les programmes de base (20) s'exécutant sur les ordinateurs (11...15) demandent les programmes (22) et/ou les programmes d'interface (23) et/ou les routines de programme (25) spécifiés dans le jeu de données de profil (21) et/ou l'affectation d'au moins un ordinateur de commande (3) ou un serveur de téléchargement (4) et les reçoivent transmis, et
- **que** les programmes de base (20) s'exécutant sur les ordinateurs (11...15), après la réception,
- mémorisent les programmes (22) et les appellent le cas échéant, et/ou
- stockent et, le cas échéant, démarrent les programmes d'interface (23), dans lequel les programmes d'interface (23) accèdent aux interfaces fournies par les programmes (22), et/ou
- stockent les routines de programme (25) dans la mémoire de programme (231), et/ou
- affectent respectivement au moins une routine de programme (25) à chacune des instructions (d₁...dₙ) du jeu d'instructions de domaine (D) en fonction de l'affectation obtenue, et
d) **que** les programmes d'interface (23) démarrés sur les ordinateurs (11...15) pour les jeux de données de profil (21) fournissent un accès aux programmes correspondants (22) pour la mise en œuvre de scénarios d'exécution automatisés par les programmes de commande d'exécution (24) dans le cluster d'automatisation (10).

6. Procédé selon la revendication 5, **caractérisé en ce que**, pendant l'exécution d'un programme de commande d'exécution (24), un nouveau jeu de données de profil (21) est transmis à l'ordinateur respectif (11...15), et **en ce que** dans ce cas, les étapes b), c) et d) sont à nouveau mises en œuvre de manière automatisée.

7. Procédé selon l'une quelconque des revendications 5 ou 6, **caractérisé en ce**
- **que**, dans le cas d'une exécution automatique, un certain nombre de profils (21) nécessaires est prédéfini au préalable et, en fonction du nombre et du type de profils (21) dans le réseau d'ordinateurs (1), un cluster d'automatisation (10) comprenant un certain nombre d'ordinateurs (11...15) qui sont nécessaires pour l'exécution automatique est prédéfini, dans lequel les programmes (22), les programmes d'interface (23) et/ou les routines de programme (25) et/ou les affectations spécifiées dans les profils individuels (21) sont installés et/ou démarrés sur les ordinateurs respectifs (11...15) lors de la réception du profil respectif (21), et que, le cas échéant, après l'exécution automatisée, le cluster d'automatisation (10) est libéré et les profils sont supprimés des ordinateurs respectifs, dans lequel, de préférence, tous les programmes (22) et/ou programmes d'interface (23) et/ou routines de programme (25) et/ou affectations nécessaires à la mise en œuvre, et en particulier transmis par l'ordinateur de commande (3), sont également supprimés, et/ou
- **que**, après la mise à disposition précédemment mentionnée, en particulier après l'installation et/ou après le démarrage des programmes (22), des programmes d'interface (23) et/ou des routines de programme (25) et/ou des affectations spécifiés sur les ordinateurs respectifs (11...15) dans les profils individuels (21), le profil (21) se trouvant sur l'ordinateur respectif (11...15) est à disposition pour être utilisé par un scénario d'exécution et que le profil respectif (21) est réservé ou enregistré pour l'utilisation exclusive dans le cadre d'un scénario d'exécution et est utilisé exclusivement par des instructions dans le cadre du même scénario d'exécution jusqu'à ce qu'il soit libéré après la fin du scénario d'exécution.

8. Procédé selon l'une quelconque des revendications précédentes, **caractérisé en ce que** les mêmes programmes (22) que ceux utilisés sur les ordinateurs du cluster d'automatisation (10) sont mis en œuvre en fonctionnement productif pour l'exécution des scénarios d'exécution automatisés sur les ordinateurs du réseau informatique (1) n'appartenant pas au cluster d'automatisation (10).

9. Procédé selon l'une quelconque des revendications 7 ou 8, **caractérisé en ce que** des ordinateurs (11...15) sur lesquels des jeux de données de profil individuels (21) sont installés, et les programmes individuels (22), les programmes d'interface (23), les routines de programme (25) et les affectations s'exécutant sur ces ordinateurs (11...15) sont utilisés par plusieurs scénarios d'exécution automatisés s'exécutant en parallèle.

10. Réseau informatique (1) comprenant un certain nombre d'ordinateurs interconnectés (11...15), sur lesquels s'exécutent respectivement un programme de base (20) mis en œuvre en tant que service s'exécutant, qui est configuré pour établir une liaison de communication de données avec un ordinateur de commande (3) à la demande de celui-ci, et respectivement un ou plusieurs programmes (22) interagissant par l'intermédiaire du réseau informatique (1), dans lequel ces programmes (22) mettent à disposition respectivement une interface prédéterminée pour permettre une communication de données avec le programme (22) respectif,
- dans lequel le système (1) présente au moins un ordinateur de commande (3), dans lequel l'au moins un ordinateur de commande (3) est conçu pour transmettre un jeu de données de profil (21) au programme de base (20) s'exécutant dans l'ordinateur respectif (11...15) pour préparer une exécution automatisée,
- dans lequel le jeu de données de profil (21) présente des informations concernant un programme (22) qui doit être exécuté sur l'ordinateur respectif (11...15) au cours de l'exécution automatisée, et
- dans lequel le jeu de données de profil (21) contient des informations concernant un programme d'interface (23) qui permet une communication de données avec le programme respectif (22) sur demande,
- dans lequel un programme d'interface (23) sélectionné par le jeu de données de profil (21) s'exécute sur au moins un ordinateur (11...15), accède à l'interface mise à disposition par le programme (22) et permet sur demande une communication de données avec le programme respectif (22), et
- dans lequel le programme d'interface (23) met à disposition un jeu d'instructions de base (B) relatif à l'interface et adapté au programme respectif (22) s'exécutant sur l'ordinateur (11...15), comprenant un certain nombre d'instructions de base (b₁...bₙ),
- dans lequel une mémoire de programme configurable (231) est attribuée aux programmes d'interface (23) respectivement pour le stockage d'un certain nombre d'instructions de base (b₁...bₙ), dans laquelle un certain nombre de routines de programme (25) sont stockées,
- dans lequel les routines de programme (25) se trouvant dans la mémoire de programme (231), lorsqu'elles sont appelées, accèdent aux interfaces respectives au moyen du jeu d'instructions de base (B),
- dans lequel un jeu d'instructions de domaine (D) comprenant un certain nombre d'instructions (d₁...dₙ) est spécifié pour le fonctionnement automatique,
- dans lequel chacune des instructions (d₁...dₙ) du jeu d'instructions de domaine (D) est affectée à au moins une routine de programme (25) se trouvant dans la mémoire de programme (231),
- dans lequel un programme de commande d'exécution (24) comprenant un certain nombre d'instructions spécifiées dans le jeu d'instructions de domaine (D) est stocké dans la mémoire de l'ordinateur (11...15),
- dans lequel l'ordinateur (11...15) met en œuvre le programme de commande d'exécution (24) et l'ordinateur (11...15), lors de la mise en œuvre d'une des instructions (d₁...dₙ) du jeu d'instructions de domaine (D), met en œuvre la routine de programme (25) affectée à l'instruction respective (d₁...dₙ) stockée dans sa mémoire de programme (231),
- dans lequel l'ordinateur de commande prend en charge la commande d'exécution centrale des programmes de commande d'exécution individuels sur les ordinateurs et déclenche leur début et/ou leur fin.

11. Réseau informatique (1) selon la revendication 10, **caractérisé en ce que** les ordinateurs (11...15), pendant l'exécution automatisée, en particulier après la mise en œuvre d'au moins une instruction (d₁...dₙ) du jeu d'instructions du domaine (D),
- modifient ou suppriment au moins une routine de programme (25) se trouvant dans la mémoire de programme (231) d'un programme d'interface (23), ou
- modifient le jeu d'instructions du domaine (D) **en ce qu'**ils affectent une autre routine de programme (25) à une instruction existante (d₁...dₙ) ou étendent le jeu d'instructions du domaine (D) **en ce qu'**ils spécifient une nouvelle instruction (d) et lui affectent une routine de programme nouvelle ou existante (25).

12. Réseau informatique (1) selon l'une quelconque des revendications 10 ou 11, **caractérisé en ce que** les ordinateurs (11...15), pendant la mise en œuvre d'un programme de commande d'exécution (24), suppriment et remplacent un programme (22) fonctionnant sur l'ordinateur respectif (11...15) par un autre programme (22), dans lequel cet autre programme (22) utilise la même interface que le programme supprimé ou l'ordinateur respectif (11...15) installe un nouveau programme d'interface 23 qui permet une communication de données avec l'autre programme 22.

13. Réseau informatique (1) selon l'une quelconque des revendications 10 à 12, **caractérisé en ce que** les ordinateurs (11...15), pendant la mise en œuvre d'un programme de commande d'exécution (24), suppriment et remplacent un programme d'interface (23) fonctionnant sur l'ordinateur respectif (11...15) par un autre programme d'interface (23) utilisant la même interface pour la communication de données.

14. Réseau informatique (1) selon l'une quelconque des revendications 10 à 13, **caractérisé en ce**
a) **que** sur chacun des ordinateurs (11...15) du système (1), respectivement un programme de base (20) s'exécute, qui permet une communication de données avec l'au moins un ordinateur de commande (3), dans lequel le programme de base (20) gère une mémoire de données de profil pour stocker un jeu de données de profil (21),
b) **qu'**un jeu de données de profil (21) est à disposition pour l'exécution automatisée, qui comprend des informations, en particulier des informations d'accès, sur au moins une des données suivantes :
- l'au moins un programme (22) à mettre en œuvre ainsi que des informations sur son fonctionnement, son installation et/ou sa surveillance, et/ou
- l'au moins un programme d'interface (23) à utiliser ainsi qu'une affectation au programme (22) à mettre en œuvre respectif, et/ou
- les routines de programme (25) à stocker dans la mémoire de programme (231), et/ou
- une affectation de routines de programme (25) à des instructions (d₁...dₙ) du jeu d'instructions de domaine (D).

15. Réseau informatique (1) selon la revendication 14, **caractérisé en ce que** le programme de base (20) s'exécutant sur un ordinateur (11...15), pendant l'exécution d'un programme de commande d'exécution (24), à la réception d'un nouveau jeu de données de profil (21), appelle les programmes (22) et/ou les programmes d'interface (23) et/ou les routines de programme (25) et/ou l'affectation qui y sont spécifiés par des ordinateurs de commande (3) ou des serveurs de téléchargement (4) et, après la réception,
- mémorise les programmes reçus (22) et les appelle le cas échéant, et/ou
- stocke et, le cas échéant, démarre les programmes d'interface reçus (23), dans lequel les programmes d'interface (23) accèdent aux interfaces fournies par les programmes (22), et/ou
- stocke les routines de programme (25) dans la mémoire de programme (231), et/ou
- affecte respectivement au moins une routine de programme (25) à chacune des instructions (d₁...dₙ) du jeu d'instructions de domaine (D) en fonction de l'affectation obtenue.

16. Procédé selon l'une quelconque des revendications 1 à 9, **caractérisé en ce qu'**au moins deux des ordinateurs du réseau sont en liaison de données avec différents réseaux de communication et/ou dispositifs d'infrastructure de communication,
dans lequel, au cours de l'exécution de test, la communication d'un des ordinateurs du réseau, par l'intermédiaire du réseau de communication connecté, à un autre ordinateur du réseau est testée,
dans lequel, en particulier, la liaison de communication examinée s'étend sur plusieurs réseaux de communication interconnectés.

17. Procédé selon l'une quelconque des revendications 1 à 9 ou 16, **caractérisé en ce que** les programmes d'interface (23) s'exécutant sur les ordinateurs (11...15) pour les jeux de données de profil (21) fournissent un nombre extensible vers le haut d'interfaces pour l'accès aux programmes correspondants (22) et/ou
**en ce que** plusieurs réseaux informatiques (1) avec les ordinateurs (11... 15) du cluster d'automatisation s'y trouvant sont combinés hiérarchiquement et utilisés par un ordinateur de commande (3) de niveau supérieur pour mettre en œuvre des exécutions automatisées sur plusieurs clusters d'automatisation et leurs ordinateurs de commande (3).

18. Réseau informatique (1) selon l'une quelconque des revendications 10 à 15, **caractérisé en ce qu'**au moins deux des ordinateurs du réseau sont en liaison de données avec différents réseaux de communication et/ou dispositifs d'infrastructure de communication,
- **en ce que** l'exécution de test comprend le test de la communication d'un des ordinateurs du réseau, par l'intermédiaire du réseau de communication connecté, à un autre ordinateur du réseau, et en particulier
- **en ce que** la liaison de communication examinée s'étend sur plusieurs réseaux de communication interconnectés.
